# FASCICULE DE BREVET EUROPEEN

(11) **EP 4 555 700 B1**
(45) Date de publication et mention de la délivrance du brevet: **14.10.2026**
(21) Numéro de dépôt: 23764682.3
(22) Date de dépôt: 13.07.2023
(51) Int. Cl.: H04L 65/611, H04L 65/612, H04L 67/02, H04N 21/6405, H04N 21/6408, H04N 21/262, H04N 21/2343

(54) **STREAMING VIDÉO ADAPTATIF HYBRIDE AMÉLIORÉ**
VERBESSERTES HYBRIDES ADAPTIVES VIDEOSTREAMING
IMPROVED HYBRID ADAPTIVE VIDEO STREAMING

(30) Priorité: 15.07.2022 FR 2207282
(43) Date de publication de la demande: 21.05.2025
(73) Titulaire: Groupe Canal +, 92863 ISSY-LES-MOULINEAUX CEDEX 9 (FR)
(72) Inventeur: NAUD, Pierre-Louis, 92863 ISSY LES MOULINEAUX CEDEX 9 (FR); HELLO, Loick, 92863 ISSY LES MOULINEAUX CEDEX 9 (FR)
(74) Mandataire: Casalonga
(86) Numéro de dépôt international: PCT/FR2023/051090
(87) Numéro de publication internationale: WO 2024/013463

(56) Documents cités:
- FR-A1- 3 092 720
- PANTOS R ET AL: "HTTP Live Streaming 2nd Edition draft-pantos-hls-rfc8216bis-11; draft-pantos-hls-rfc8216bis-11.txt", no. 11, 11 May 2022 (2022-05-11), pages 1 - 101, XP015151873, Retrieved from the Internet <URL:https://tools.ietf.org/html/draft-pantos-hls-rfc8216bis-11> [retrieved on 20220511]

## Description

### DOMAINE DE L'INVENTION

La présente invention concerne le domaine de la diffusion vidéo en continu ou « streaming » vidéo, de type adaptatif hybride.

### TECHNIQUES ANTERIEURES

Les solutions actuelles de streaming vidéo combinent des mécanismes traditionnels de diffusion par flux vidéo unicast (monodiffusion) et des mécanismes plus récents de diffusion par flux multicast (multidiffusion). Elles sont dites « hybrides » ou « MABR » (pour Multicast Adaptative Bitrate). La diffusion multicast permet notamment la mutualisation de ressources (bande passante réseau) pour un grand nombre d'utilisateurs finaux, et permet ainsi de réduire substantiellement la consommation énergétique, par une congestion réduite du réseau Internet. Typiquement, la diffusion multicast peut être privilégiée pour des événements en direct ou « live » à forte audience.

Les documents WO 2016/147092 et FR3092720 décrivent par exemple des solutions hybrides de streaming vidéo à débit adaptatif (ABR), combinant ces mécanismes.

Dans ces systèmes, il est classique d'avoir un ou plusieurs réseaux de diffusion de contenus (ou CDN pour « *Content Delivery Network »)* formés de serveurs de contenus mettant à disposition des contenus sous forme de flux unicast. Les contenus disponibles sont décrits dans des fichiers descriptifs, dont les appellations varient d'une technologie à l'autre, par exemple « master playlist », « media playlist » ou « manifest » en HLS (« HTTP Live Streaming » d'Apple - nom commercial) ou « MPD » (pour « Media Presentation Description ») en MPEG-DASH. Les utilisateurs finaux, typiquement des lecteurs unicast, peuvent alors accéder à ces contenus par requêtes HTTPs unicast, c'est-à-dire HTTP sécurisé, aux adresses indiqués dans ces fichiers.

Un même contenu est classiquement proposé selon plusieurs résolutions, qualités et caractéristiques (audio et/ou vidéo, y compris les réglages d'accessibilités pour les personnes avec déficience auditive et/ou visuelle), au choix du lecteur vidéo qui « s'adapte » de façon dynamique en basculant, si nécessaire, d'une résolution/caractéristique/qualité à l'autre. Aussi, le streaming vidéo hybride est dit « adaptatif », ou « Multicast ABR ».

Certains de ces contenus accessibles en unicast sont transcastés (i.e. convertis puis diffusés) en des flux multicast par un équipement convertisseur dédié. C'est typiquement le cas pour un programme à forte audience, par exemple un événement en direct ou « live ».

En raison de la nature « unicast » des lecteurs vidéo des terminaux utilisateurs, cette diffusion multicast nécessite la mise en oeuvre d'un convertisseur multicast-vers-unicast, généralement au niveau d'une passerelle domestique du réseau local (type wifi domestique) auxquels appartiennent les équipements utilisateurs. La passerelle domestique est typiquement un box Internet (d'un fournisseur d'accès) ou un box TV, équipant un logement privé ou un espace ouvert au public (aéroport, gare, avion, etc.). La passerelle domestique met en place un serveur HTTP sur le réseau local, pour délivrer les contenus convertis sous forme de flux unicast. Le convertisseur peut également être, dans certains cas, simplement une brique logicielle présente à même le terminal utilisateur (typiquement, directement embarqué dans une application).

Un des enjeux de ces systèmes de diffusion hybride est la gestion, au niveau des réseaux locaux des utilisateurs, des contenus issus de la diffusion multicast. En effet, ceux-ci ne sont généralement disponibles que sur certains réseaux locaux bien précis (logement, aéroport, gare, etc.).

En particulier, en se déplaçant, un utilisateur peut amener son terminal à changer de réseau de communication, par exemple en passant du réseau wifi domestique à un réseau public de téléphonie mobile, typiquement en quittant son domicile). Ce changement de réseau est susceptible d'introduire une coupure vidéo visible de l'utilisateur. C'est notamment le cas lorsque l'utilisateur visionne le flux unicast d'origine multicast et qu'il quitte l'espace domestique. Il perd alors son accès à la passerelle domestique assurant la conversion multicast-vers-unicast, et donc le flux unicast correspondant. C'est aussi le cas si le convertisseur est directement dans le terminal, le flux multicast n'étant disponible que sur l'espace domestique. Le contenu vidéo n'est récupéré qu'après détection de la perte de flux et basculement vers un flux unicast natif (c'est-à-dire obtenu du CDN). Les documents WO 2016/147092 et FR3092720 susvisés n'offrent pas de solution à cette problématique.

D'autre part, la gestion au niveau des passerelles domestiques peut rapidement devenir complexe.

Par exemple, dans ces mêmes documents WO 2016/147092 et FR3092720, la passerelle domestique, notée M2AP Proxy ou module proxy, se doit de manipuler le fichier descriptif « manifest » au fil de la récupération de données unicast avant de basculer sur le flux multicast et de le convertir. La manipulation du manifest constitue une charge pour la passerelle et est susceptible d'erreur. D'expérience, toute manipulation de manifest ailleurs que sur la plateforme de l'opérateur est un risque important en terme de fiabilité et de qualité de la plateforme, et présente des risques importants d'incidents auprès des utilisateurs finaux, en plus de déporter une complexité de mise en oeuvre et de maintenance importante auprès d'un nombre souvent important d'applications. Il est donc un souhait de réduire cette manipulation, voire de s'en affranchir.

Par ailleurs, depuis peu (2021), les navigateurs web utilisent par défaut la liaison sécurisée HTTPs pour les connexions aux serveurs distants web, notamment ceux des CDN. Les lecteurs vidéo sont souvent mis en oeuvre dans ces navigateurs web. Un accès non sécurisé (donc simple HTTP) requiert désormais une action volontaire (acceptation de la liaison non sécurisée) de l'utilisateur, et dégrade ainsi l'expérience utilisateur. Or, la mise en place d'un serveur local sécurisé (HTTPs) pour éviter cette contrainte est complexe, en particulier lorsqu'il s'agit d'un parc de millions de passerelles domestiques. Par exemple, il devient nécessaire d'obtenir et charger des certificats privés pour chaque passerelle, et il n'est pas acceptable en terme de sécurité informatique d'installer des certificats de domaines disponibles publiquement dans des espaces dits « non sécurisés » (chez les particuliers), étant donné les risques de vol, réutilisation de ces certificats, permettant ensuite des attaques informatiques de type « man in the middle » à haut risque pour les clients. Il est donc un besoin de simplifier la gestion sécurisée du flux unicast local issu du flux multicast.

### EXPOSE DE L'INVENTION

Dans ce dessein, les inventeurs ont constaté qu'en exposant le serveur local avec un nom de domaine public dédié, non exploité hors des réseaux locaux utilisateurs, il est possible de mettre en place des liaisons sécurisées (donc serveur HTTPs) avec des certificats publics directement acceptés par les navigateurs web et les applications installées des différents systèmes d'exploitation, tout en permettant une déclaration des flux unicast convertis (issus du multicast) sans retouche du manifest par les passerelles domestiques. Une gestion améliorée (simplifiée) des flux multicast par les passerelles est ainsi obtenue.

Par ailleurs, les inventeurs ont constaté que le mécanisme de Content Steering (pilotage de contenu) développé par Apple (https ://developer.apple.com/streaming/ HLSContentSteeringSpecification.pdf) peut être habilement détourné pour gérer une transition douce (donc sans coupure vidéo pour l'utilisateur) en cas de changement de réseau, avec une implémentation extrêmement simplifiée dans les différentes applications web et installées.

Aussi, l'invention propose un système de streaming vidéo adaptatif hybride tel que défini par la revendication 1.

Un tel système comprend notamment :
un équipement de diffusion de fichiers manifest descriptifs de contenus accessibles auprès d'un réseau public de diffusion unicast de contenus, et
au moins un agent passerelle sur un réseau local auquel un lecteur vidéo utilisateur accède, l'agent passerelle comprenant un convertisseur de flux multicast en flux unicast et un serveur web local mettant à disposition du lecteur vidéo utilisateur (sur le réseau local) le flux unicast converti,
caractérisé en ce que le serveur web local est exposé sur le réseau local avec un nom de domaine dédié, et les fichiers manifest référencent le flux unicast converti, sur ce nom de domaine.

Par « réseau de diffusion de contenus », il faut comprendre un ou plusieurs CDNs publics qui classiquement mettent à disposition les contenus, dont les segments sont accessibles par requête unicast. Par « agent passerelle », il faut comprendre toute brique logicielle ou équipement d'un réseau local, qui possède un accès à un réseau public (via une passerelle physique le cas échéant) pour récupérer le flux multicast et sert donc de passerelle au moins pour ce flux vers le réseau domestique. Il peut s'agir d'un proxy HTTP local, d'une passerelle IP, d'une box Internet, d'une box TV, d'un routeur, d'une brique logicielle exécutée sur un terminal utilisateur hébergeant le lecteur vidéo, etc. Par définition, le « réseau local » comprend un adressage IP propre, non accessible sur les réseaux publics (e.g. Internet) auquel il peut être relié via une passerelle (hébergeant l'agent ci-dessus ou non).

Par « serveur local », il faut comprendre un serveur accessible uniquement sur le réseau local. Par définition, un même serveur, i.e. ayant la même adresse IP, peut être mis en oeuvre au sein d'un autre réseau local. C'est pourquoi il est traditionnellement considéré qu'il n'est pas envisageable, au regard des risques en terme de sécurité informatique, d'obtenir des certificats publics (e.g. SSL/TLS) pour des noms de domaines ayant une existence publique pour les serveurs locaux.

Si le serveur local est capable de mettre à disposition des lecteurs vidéos et terminaux utilisateurs plusieurs flux unicast issus de plusieurs flux multicast reçus par l'agent passerelle, il est également envisagé que cet agent puisse mettre en oeuvre plusieurs serveurs locaux (alors associés à des noms de domaine dédiés différents) pour traiter des flux unicast convertis différents.

Un tel serveur local est dit « exposé avec un nom de domaine dédié » lorsque justement il est associé, dans le réseau local, à un nom de domaine classiquement réservé aux sites web publics (Internet). Une telle exposition consiste par exemple en une configuration d'un serveur DNS (Domain Name System) local, généralement mis en oeuvre de façon logicielle par l'agent passerelle ou tout autre équipement dédié du réseau local. L'adresse IP locale du serveur local est enregistrée dans ce serveur DNS local en association avec le nom de domaine dédié, pour assurer la redirection des requêtes unicast du lecteur vidéo visant le nom de domaine, vers le serveur local.

Par « référencer le flux unicast converti, sur le nom de domaine », il faut comprendre que les URLs sur lesquelles les segments du contenu du flux sont accessibles sont des URLs formées à partir du nom de domaine.

Ainsi, l'invention force l'utilisation d'un nom de domaine dédié, différent du nom de domaine « unicast » public (pour le réseau public de diffusion unicast), pour un serveur local, permettant de la sorte son référencement au sein même des fichiers manifest diffusés par le CDN public, avant même l'instanciation du serveur local et la conversion du flux multicast converti. Il n'est donc plus nécessaire aux agents passerelle de manipuler les fichier manifest, ni aux agents passerelle de disposer des certificats des noms de domaines publics afin d'effectuer un « routage » vers le réseau local quand nécessaire. La gestion du streaming via le flux multicast est par conséquent simplifiée et sécurisée.

Corrélativement, l'invention concerne également un dispositif (par exemple une passerelle domestique) tel que défini par la revendication 12.

Un tel dispositif comprend notamment un agent passerelle apte à être connecté à un réseau local auquel un lecteur vidéo utilisateur accède, le dispositif comprenant :
un agent multicast apte à recevoir un flux multicast d'un réseau public,
un convertisseur du flux multicast en un flux unicast, et
un serveur web local mettant à disposition du lecteur vidéo utilisateur le flux unicast converti, caractérisé en ce que l'agent passerelle est configuré pour exposer le serveur web local sur le réseau local avec un nom de domaine dédié.

L'invention concerne également un procédé de streaming vidéo adaptatif hybride, tel que défini par la revendication 13, dans un système de streaming vidéo comprenant un équipement de diffusion de fichiers manifest descriptifs de contenus accessibles auprès d'un réseau public de diffusion unicast de contenus, et au moins un agent passerelle sur un réseau local auquel un lecteur vidéo utilisateur accède.

Le procédé comprend notamment les étapes suivantes :
convertir, par l'agent passerelle, un flux multicast en flux unicast, et
mettre à disposition du lecteur vidéo utilisateur, via un serveur web local dans l'agent passerelle, le flux unicast converti,
le procédé étant caractérisé en ce qu'il comprend :
   la configuration de l'agent passerelle pour exposer le serveur web local sur le réseau local avec un nom de domaine dédié, et
   la configuration de l'équipement de diffusion pour diffuser des fichiers manifest qui référencent le flux unicast converti, sur ce nom de domaine.

Des caractéristiques facultatives des modes de réalisation de l'invention sont définies dans les revendications annexées. Certaines de ces caractéristiques sont expliquées ci-dessous en référence à un système, tandis qu'elles peuvent être transposées en caractéristiques de procédé.

Le serveur local exposé (localement) avec un nom de domaine n'a toujours pas d'existence/exposition publique. Idéalement il peut être réservé pour empêcher sa réservation par un tiers ouvrant la porte à des attaques informatiques. Cela permet avantageusement d'utiliser le même nom de domaine pour un parc de passerelles domestiques, typiquement pour des box Internet déployées chez des abonnés. Aussi, dans des modes de réalisation, le système comprend une pluralité d'agents passerelle associés à une pluralité de réseaux locaux respectifs auxquels des lecteurs vidéo utilisateurs accèdent, et le serveur web local de chaque agent passerelle est exposé avec le même nom de domaine.

Bien entendu, il est possible d'organiser un parc de passerelles domestiques (typiquement des box Internet) en sous-groupes de (agents) passerelles domestiques, chaque sous-groupe étant affecté d'un nom de domaine respectif pour exposer leur serveur web local. Les sous-groupes peuvent être formés selon des critères variables, par exemple selon le fournisseur d'accès, selon une zone géographie ou un abonnement souscrit pour un fournisseur d'accès donné, etc.

Dans un mode de réalisation, le serveur web local est un serveur HTTPs. De façon avantageuse, la fourniture d'un nom de domaine au serveur web local permet d'obtenir aisément des certificats publics acceptés ou reconnus nativement par les navigateurs web ou lecteurs multimédia des terminaux utilisateurs. Aussi, la mise en place de l'invention ne nécessite pas d'action particulière de configuration de son terminal par l'utilisateur.

Dans un mode de réalisation, l'équipement de diffusion diffuse un fichier manifest de pilotage définissant un ordre de priorité entre le flux unicast converti référencé sur le nom de domaine et un ou plusieurs contenus identiques référencés, dans les fichiers manifest descriptifs de contenus, sous un chemin différent.

Par « contenu identique », il faut comprendre un contenu défini dans les fichiers manifest avec les mêmes caractéristiques ou attributs (résolution, qualité, codec, fréquence, audio, sous-titres, etc.).

Un tel fichier manifest de pilotage, distinct des fichiers manifest descriptifs des contenus, permet avantageusement au lecteur multimédia de basculer en douceur (sans coupure d'image) sur un contenu unicast natif du CDN lorsque le terminal utilisateur change de réseau et sort du réseau local géré par l'agent passerelle. En effet, le lecteur multimédia bascule sur un contenu identique, et n'a pas besoin de déterminer une autre résolution/qualité (par exemple une autre Representation en DASH) ce qui induirait une coupure d'image. Il permet également d'initier une session utilisateur (dit « zapping ») rapidement, avant même que l'agent passerelle soit prêt à exposer le contenu multicast en unicast, puis de basculer en douceur sur l'agent passerelle une fois prête à exposer les ressources converties du multicast.

Le fichier manifest de pilotage permet une gestion de l'accès aux différents contenus identiques sans modification des fichiers manifest descriptifs des contenus.

Dans un mode particulier de réalisation, les fichiers manifest descriptifs de contenus comprennent des attributs de priorisation associés à des chemins différents incluant le nom de domaine, et le fichier manifest de pilotage fournit une liste ordonnée d'attributs de priorisation. Dans cette configuration, le fichier manifest de pilotage peut rester concis (uniquement une liste ordonnée), simplifiant sa gestion et sa transmission.

Dans un mode spécifique de réalisation, l'équipement de diffusion est configuré pour déclarer, dans le fichier manifest de pilotage, un contenu alternatif (e.g. identique) au flux unicast converti comme étant prioritaire sur le flux unicast converti, et à détection d'un événement de démarrage du serveur web local, pour modifier le fichier manifest de pilotage de sorte à déclarer le flux unicast converti comme étant prioritaire.

Cette disposition garantit une expérience utilisateur optimale et un usage efficace du réseau, par un accès immédiat au contenu (zapping efficace) et une bascule douce (sans coupure d'image) vers le contenu diffusé en multicast. On comprend que, dans ce cas, le fichier manifest de pilotage peut être spécifique aux terminaux/lecteurs utilisateurs d'un réseau local donné.

Selon une caractéristique spécifique, l'équipement de diffusion est configuré pour recevoir, du lecteur vidéo utilisateur, une requête d'obtention du fichier manifest de pilotage, la requête comprenant une indication de démarrage du serveur web local, et l'événement de démarrage du serveur web local comprend l'un parmi :
- la réception de l'indication de démarrage, et
- l'envoi, en réponse à la requête et à destination d'un gestionnaire d'agents passerelle, d'une instruction de démarrage du serveur web local.

Dans un mode particulier de réalisation, le fichier manifest de pilotage est conforme au Steering Manifest défini dans la spécification « HLS Content Steering Specification, v1.2b1 ».

Dans un autre mode de réalisation, les fichiers manifest comprennent une première piste référençant le flux unicast converti sur le nom de domaine et au moins une deuxième piste référençant le ou les contenus identiques sous un chemin différent vers un réseau public de diffusion unicast de contenus. Ladite première piste indique au moins un serveur de récupération parmi le ou les réseaux publics de diffusion unicast de contenus. Ainsi, l'agent passerelle est renseigné sur le serveur à utiliser en cas d'absence (par exemple « start over ») ou de défaillance du flux multicast converti, pour récupérer les segments manquants. Cette indication permet également d'identifier les données d'authentification nécessaires pour une telle récupération : ainsi le lecteur vidéo est apte à fournir à l'agent passerelle un jeton d'accès correspondant au serveur de récupération indiqué, qui est nécessaire à la récupération des segments manquants (pour s'authentifier auprès du serveur), en cas d'absence ou de défaillance du flux multicast.

Dans un mode de réalisation, le référencement, dans les fichiers manifest descriptifs de contenus, du flux unicast converti sur le nom de domaine comprend une indication d'un serveur de remplacement, dans le réseau public de diffusion unicast de contenus, apte à servir un contenu identique au flux unicast converti. Cette disposition permet, en cas de d'indisponibilité du flux multicast converti (par exemple « start over ») ou de dysfonctionnement du serveur web local, une bascule rapide vers le bon serveur de remplacement. En fournissant les fichiers manifest à la demande aux lecteurs vidéo utilisateurs, il est en outre possible de personnaliser le serveur de remplacement, par exemple de sorte à équilibrer les charges sur plusieurs serveurs du ou des CDNs, ou de sélectionner le CDN le plus performant pour cet utilisateur particulier, par exemple en cas de dysfonctionnement du flux multicast converti.

Dans un mode de réalisation utilisant le fichier manifest de pilotage, le système comprend en outre un équipement de diffusion multicast de contenu configuré pour basculer le contenu d'un flux multicast diffusé, depuis une première chaine vers une seconde chaine, système dans lequel les fichiers manifest descriptifs de contenus comprennent, pour les deux chaînes, le même référencement du flux unicast converti, sur le nom de domaine, et
l'équipement de diffusion de fichiers manifest est configuré pour modifier un fichier manifest de pilotage associé à la première chaîne avant ladite bascule de sorte à supprimer toute priorité au flux unicast converti, et pour modifier un fichier manifest de pilotage associé à la deuxième chaîne après ladite bascule de sorte à déclarer une priorité (de préférence la plus haute priorité) au flux unicast converti.

Il faut entendre par « chaines » tous canaux ou services référencés distinctement, entre lesquels un utilisateur peut basculer (zapping), pour visionner des contenus différents.

Cette configuration est particulièrement avantageuse pour optimiser l'usage du réseau public en réduisant les appels et flux unicast, tout en conservant une expérience utilisateur satisfaisante (sans coupure d'image). La bascule de contenu peut par exemple prendre place lors de la fin d'un événement (sur la première chaîne) à forte audience, typiquement un événement live, ou lors de la détection d'une nouvelle répartition d'audience entre chaînes (la deuxième chaîne attirant plus de monde après la bascule).

En effet, par le jeu des priorités dans les fichiers manifest de pilotage, un lecteur vidéo utilisateur visionnant le contenu issu du flux multicast de la première chaîne est basculé vers un flux unicast natif (du CDN public) par la suppression de la priorité sur le flux unicast converti. Dans le même temps (juste après la bascule), un autre lecteur vidéo utilisateur visionnant le contenu unicast natif de la deuxième chaîne (du CDN public) est basculé vers le flux unicast converti par l'ajout de la priorité sur ce flux unicast converti dans le fichier manifest de pilotage de la deuxième chaîne.

La présente invention vise également un programme informatique comportant des instructions pour la mise en oeuvre du procédé ci-dessus, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

L'invention vise également un support d'enregistrement non transitoire lisible par un ordinateur sur lequel est enregistré un programme pour la mise en oeuvre du procédé ci-dessus, lorsque ce programme est exécuté par un processeur.

Au moins une partie des procédés selon l'invention peut être mise en oeuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en oeuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

### BREVE DESCRIPTION DES DESSINS

D'autres caractéristiques, détails et avantages de l'invention apparaîtront à la lecture de la description détaillée ci-après. Celle-ci est purement illustrative et doit être lue en regard des dessins annexés, sur lesquels :
La **Figure 1** représente schématiquement un système de streaming vidéo adaptatif hybride selon un ou plusieurs modes de réalisation de l'invention ;
La **Figure 2a** illustre un exemple de fichier descriptif ou « manifest » racine associé à un service multimédia, selon un ou plusieurs modes de réalisation de l'invention ;
La **Figure 2b** illustre un exemple de fichier descriptif ou « manifest » piste correspondant à une piste d'un service multimédia, selon un ou plusieurs modes de réalisation de l'invention ;
La **Figure 2c** illustre un exemple de fichier Content Steering ;
La **Figure 2d** illustre un exemple de fichier descriptif ou « manifest » piste correspondant à une flux unicast converti à partir d'un flux multimédia et servi par un serveur web local exposé avec un nom de domaine, selon un ou plusieurs modes de réalisation de l'invention ;
La **Figure 3** illustre, schématiquement, un passerelle domestique équipée d'un agent passerelle, selon un ou plusieurs modes de réalisation de l'invention ;
La **Figure 4** illustre schématiquement des étapes générales de streaming au niveau d'un lecteur vidéo utilisateur, selon un ou plusieurs modes de réalisation de l'invention ;
La **Figure 5** illustre schématiquement des étapes générales de fonctionnement d'un agent passerelle pour la gestion du flux multicast, selon un ou plusieurs modes de réalisation de l'invention ;
La **Figure 6a** illustre une variante de fichier manifest piste correspondant au flux unicast converti, selon un ou plusieurs modes de réalisation de l'invention ; et
La **Figure 6b** illustre une autre variante de fichier manifest piste correspondant au flux unicast converti, selon un ou plusieurs modes de réalisation de l'invention.

### DESCRIPTION DETAILLEE

Le streaming vidéo adaptatif hybride ou « MABR » est une solution de streaming éco-responsable au sens où il tente de favoriser l'usage d'une diffusion multicast pour un ou plusieurs contenus, de préférence ceux ayant un fort pouvoir d'audience. En effet, la diffusion multicast permet, avec un unique flux sur le réseau public, de remplacer des flux unicast individuels multiples pour plusieurs abonnés respectifs regardant ce contenu. En utilisant la diffusion multicast sur le réseau public (Internet) pour une partie des contenus, la congestion du réseau public est réduite, et sa consommation énergétique associée également.

Par la suite, le terme « flux unicast natif » fait référence à ces flux unicast individuels obtenus, de façon classique, auprès des réseaux publics de diffusion de contenus, autrement connus sous l'appellation de CDNs pour (« *Content Delivery Networks* »)*.*

Le streaming vidéo adaptatif hybride requiert néanmoins la conversion de chaque flux multicast en un flux unicast pour mise à disposition de l'utilisateur final (généralement un lecteur vidéo utilisateur). Ce flux unicast issu de la conversion d'un flux multicast préalable est dénommé « flux unicast converti » par la suite. Cette mise à disposition de l'utilisateur final est généralement locale au domicile de l'utilisateur ou à un espace restreint (aéroport, avion, gare, train, etc.), via un serveur web sur un réseau local au domicile/à l'espace restreint.

L'instanciation du serveur web local est gérée par un agent, dénommé ci-après « agent passerelle », qui peut équiper une passerelle domestique physique du domicile/de l'espace restreint. C'est typiquement le cas d'une box Internet chez un particulier.

Un ou plusieurs modes de réalisation de l'invention prévoient l'affectation d'un nom de domaine dédié au serveur web local. Ce nom de domaine n'étant pas exposé publiquement mais uniquement sur le réseau local, il peut être utilisé de façon identique sur plusieurs réseaux locaux, équipés chacun d'un agent passerelle selon l'invention. Il peut s'agir des réseaux locaux de multiples abonnés, tous équipés d'une box Internet chez le même fournisseur d'accès proposant un service de streaming vidéo.

Les fichiers manifest descriptifs des contenus du service de streaming video peuvent alors référencer, de façon classique, les flux unicast natifs accessibles auprès des CDNs publics, mais également référencer, à l'aide du nom de domaine dédié, le (ou les) flux unicast converti accessible auprès du serveur web local de chaque abonné. Cela permet de produire ces fichiers manifest pour les multiples abonnés, au niveau d'un équipement dédié du réseau public, sans manipulation par l'agent passerelle.

De préférence, le (ou les) flux unicast converti accessible auprès du serveur web local de chaque abonné est (sont) référencé en premier dans les fichiers manifest, c'est-à-dire avant les flux unicast natifs accessibles auprès des CDNs publics. Aussi, la lecture du contenu débutera immédiatement depuis l'agent passerelle, si disponible, sans aller-retour entre différentes pistes via par exemple le Content Steering décrit par la suite. En tout état de cause, l'agent passerelle est en charge de renvoyer dans tous les cas les media segments demandés comme décrit par la suite. Bien entendu, un ordre inverse peut être envisagé (flux unicast converti référencé en dernier).

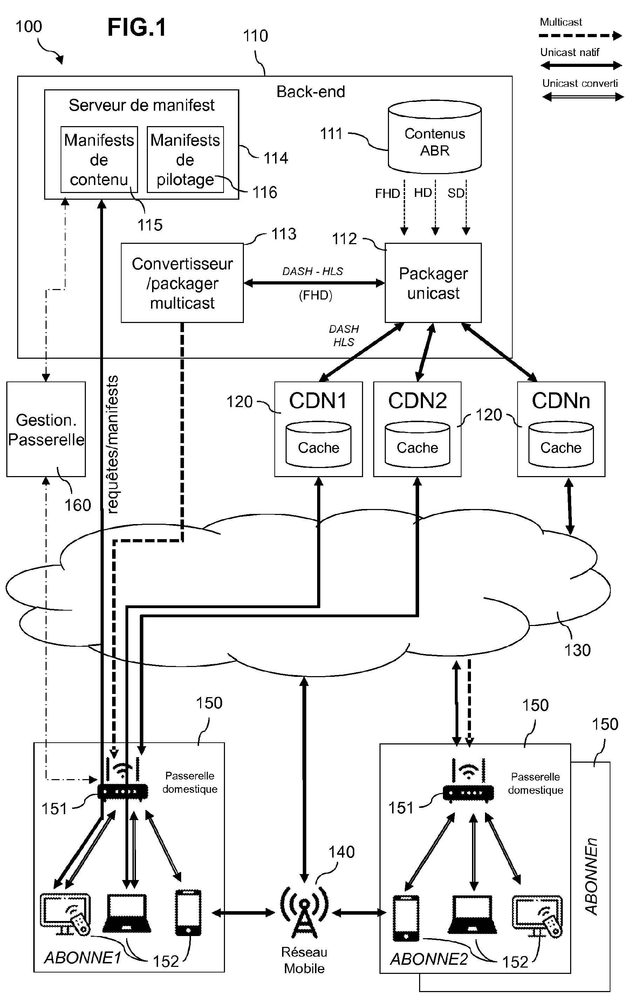

**La** **Figure 1** illustre un système de streaming vidéo adaptatif hybride 100 pour une mise en oeuvre de l'invention. Seuls les équipements et fonctions utiles à une description de l'invention sont illustrés, pour simplifier les explications. Néanmoins, l'homme de l'art reconnaitra les équipements ou fonctions additionnelles qui sont classiquement utilisés pour le fonctionnement d'un tel système.

La représentation des équipements et fonctions est purement schématique. Un bloc ou module illustré peut être mis en oeuvre au sein d'un ou plusieurs équipements physiques (type serveurs). De même, deux ou plusieurs blocs/modules illustrés peuvent être mis en oeuvre au sein d'un même équipement physique.

Le système 100 comprend un centre de préparation de streaming ou « back-end » 110, un ou plusieurs réseaux publics de diffusion unicast de contenus ou « CDN » 120, un réseau de communication type Internet 130, un réseau alternatif de communication par exemple un réseau de téléphonie mobile 140, une multitude d'environnements d'abonnés 150 (et réseaux locaux associés), et de façon optionnelle (selon les modes de réalisation décrits par la suite) un équipement gestionnaire des passerelles domestiques d'abonné 160.

Le centre de préparation de streaming 110 comprend de façon connue des contenus 111, un packager ou empaqueteur unicast 112, un convertisseur/packager ou empaqueteur multicast 113 et un serveur de fichiers descriptifs 114.

Les contenus multimédia 111 sont stockés localement sous forme encodée et préférablement encryptée. Il existe donc de façon préalable (non illustré) une ou plusieurs sources de contenus initiaux, et des encodeurs multimédias pouvant encoder un contenu initial selon des résolutions ou qualités différentes. A titre d'exemple, un contenu initial peut correspondre à un film, un documentaire, un épisode de série, un événement en direct (sportif ou non), etc.

La Figure illustre trois résolutions d'un même contenu initial, à savoir une version FHD (très haute résolution), une version HD (haute résolution) et une version SD (faible résolution). Par la suite, on désigne « contenu » le fichier de l'une quelconque de ces résolutions ou qualités différentes. En d'autre termes, le contenu initial (film, documentaire, événement sportif, etc.) peut donner naissance à N (entier) contenus accessibles dans le système de streaming 100.

De façon connue, un grand nombre de critères peut être utiliser pour différencier plusieurs contenus issus d'un même contenu initial : par exemple, résolution, qualité, fréquence de trame, codec, langue audio, sous-titre, etc.

Généralement, une partie des contenus 111 est stockée de façon permanente dans une base de données, alors qu'une autre partie des contenus est générée (encodée) à la volée, typiquement lors d'événements en direct.

La suite de la description se concentre principalement sur un seul contenu initial encodé selon les trois résolutions ci-dessus. Bien entendu, des considérations similaires s'appliquent à tous les contenus disponibles dans le système 100 (issus de multiples contenus initiaux), peu importe les critères (résolution, qualité, etc.) de variation de contenu (créant les 1 à N alternatives d'un même contenu initial).

Il est à noter, en outre, que si par la suite la description se concentre sur la diffusion vidéo, des considérations similaires s'appliquent aux autres composantes d'un service multimédia, typiquement les pistes audio, sous-titrages, données interactives, etc.

De façon connue, les contenus 111 alimentent l'empaqueteur unicast 112 qui empaquètent les contenus encodés en segments média unicast (« packager »). L'empaqueteur fragmente le contenu encodé et génère, pour chaque contenu alternatif (au sens résolutions ou qualités différentes, etc.), des paquets de données, ou « segments média », qui satisfont un format de streaming unicast. Typiquement, les segments média d'un même contenu média portent le même nom de fichier complété par exemple d'un compteur s'incrémentant.

Ces segments media sont stockés, sous ces noms, en mémoire de serveurs d'un réseau public de diffusion unicast de contenus 120, également connu sous l'appellation de « CDN ». La Figure illustre trois CDNs 120 pour la diffusion unicast des segments média correspondant aux contenus accessibles dans le système de streaming représenté. Bien entendu, un nombre différent d'un ou plusieurs CDNs est envisageable. Ces CDNs jouant des rôles similaires, ils seront désignés communément par « le CDN », dans la suite du document.

Pour une diffusion en direct, les segments média créés peuvent être stockés pour une durée limitée permettant un « retour en arrière » de l'utilisateur. Ce mécanisme de retour en arrière est également connu sous l'appellation de « startover ».

Dans le cadre du streaming MABR, le centre de préparation de streaming 110 comprend le convertisseur/packager ou empaqueteur multicast 113 qui gère la diffusion multimédia d'un ou plusieurs des contenus 111. Dans l'exemple illustré, le contenu alternatif de résolution FHD est récupéré par streaming unicast interne de l'empaqueteur unicast 112. Un fichier simplifié descriptif des pistes disponibles pour le multicast peut être fourni en amont par l'empaqueteur unicast 112 afin de permettre au convertisseur/packager multicast 113 de récupérer celles-ci. En variante, le contenu peut être directement récupéré du stockage 111.

Le convertisseur/packager multicast 113 est un transcaster au sens où il convertit le contenu 111 en datagrammes multicast et assure leur transmission à destination des utilisateurs ayant souscrit un abonnement au flux multicast correspondant. Le convertisseur/packager multicast 113 peut également s'occuper de la gestion des demandes, par les utilisateurs, d'abonnement aux divers flux multicast qu'il diffuse. En variante, cette gestion des abonnements peut être réalisée par un autre module, voire par un autre équipement serveur.

Bien qu'il ne soit illustré qu'un seul contenu ou flux multicast pour des raisons de clarté, le convertisseur/packager multicast 113 peut assurer la diffusion multicast d'un grand nombre de flux. En outre, bien que le convertisseur/packager multicast 113 soit représenté au sein du centre back-end 110, il peut être mis en oeuvre dans un serveur multicast d'un tiers différent de celui gérant le centre back-end 110, typiquement dans un serveur multicast du fournisseur d'accès équipant les abonnés illustrés.

Le serveur de fichiers descriptifs ou « manifests » 114 stocke les fichiers de description 115 des différents contenus stockés sur les CDNs 120 et accessibles aux utilisateurs. Ces fichiers sont par exemple générés par l'empaqueteur unicast 112. Typiquement, le serveur de fichiers descriptifs 114 est accessible sur le CDN lui-même (l'un des CDNs représentés), permettant aux utilisateurs de récupérer les fichiers descriptifs, sur requêtes.

De façon connue, un fichier descriptif racine est généré pour chaque service multimédia (par exemple chaîne TV). Ce fichier de description est appelé « manifest » ou MPD dans le protocole MPEG DASH (« *Moving Picture Experts Group Dynamic Adaptive Streaming over HTTP* » - nom commercial) et « liste de lecture maître » (« *master playlist* ») dans le protocole HLS (pour « *HTTP Live Streaming* »)*.* Le fichier descriptif racine est généré une unique fois pour des contenus fixes (par exemple un service de vidéo à la demande) ou est généré dynamiquement pour des contenus variables (par exemple un événement filmé en direct).

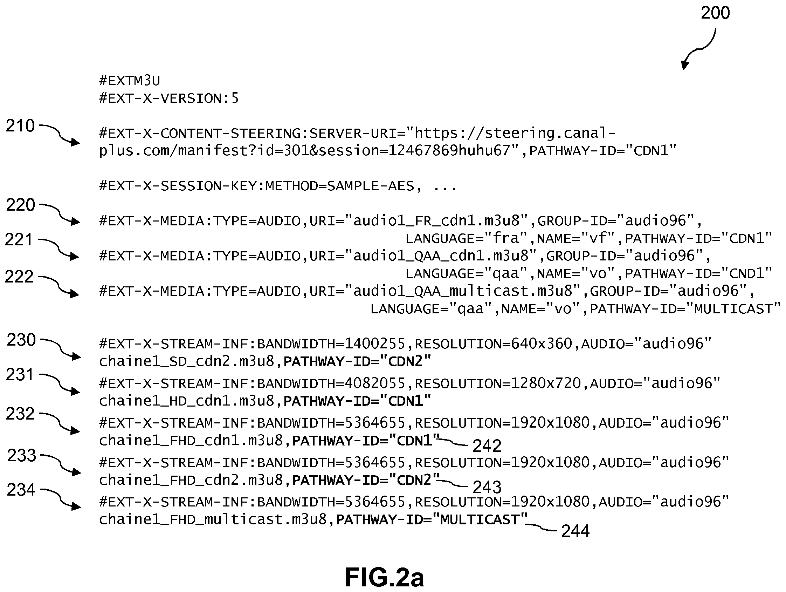

Un exemple de fichier descriptif racine 200 est illustré en **Figure 2a** au format HLS. Ce fichier a été simplifié aux éléments utiles, pour des raisons de clarté. En pratique, d'autres attributs sont précisés pour les pistes disponibles. Le fichier descriptif racine comprend des metadata (sur les lignes commençant par le balise #) dont certaines définissent une pluralité de pistes qui correspondent à des contenus disponibles sur le CDN 120. Chaque piste est composée d'une ligne de metadata spécifiant des attributs de ladite piste et d'une seconde ligne indiquant l'URL d'un fichier associé.

Dans cet exemple, la piste 220 définit un contenu audio en français, dont un détail des segments média est fourni dans le fichier « audio1_FR_cdn1.m3u8 ». De même, la piste 221 définit un contenu audio en version originale, dont un détail des segments média est fourni dans le fichier « audio1_QAA_cdn1.m3u8 ».

La piste 230 définit un contenu vidéo en basse résolution (640x360), dont un détail des segments média est fourni dans le fichier « chaine1_SD_cdn2.m3u8 ». De même, la piste 231 définit un contenu vidéo en haute résolution (1280x720), dont un détail des segments média est fourni dans le fichier « chaine1_HD_cdn1.m3u8 ». La piste 232 définit un contenu vidéo en très haute résolution (1920x1080), dont un détail des segments média est fourni dans le fichier « chaine1_FHD_cdn1.m3u8 ». La piste 233 définit le même contenu vidéo en très haute résolution (1920x1080), dont un détail des segments média est fourni dans le fichier « chaine1_FHD_cdn2.m3u8 ». Les deux pistes 232 et 233 correspondent donc au même contenu (même résolution), cependant accessibles sur deux CDNs 120 différents (ce qui serait visible au travers des URLs indiqués dans les fichiers m3u8 correspondants).

A chaque piste alternative dans le fichier descriptif 200 correspond donc un second fichier descriptif de contenu « m3u8 », ou « fichier descriptif de piste », qui indique les adresses web URL où obtenir, par requête unicast, les différents segments média constituant le contenu/la piste.

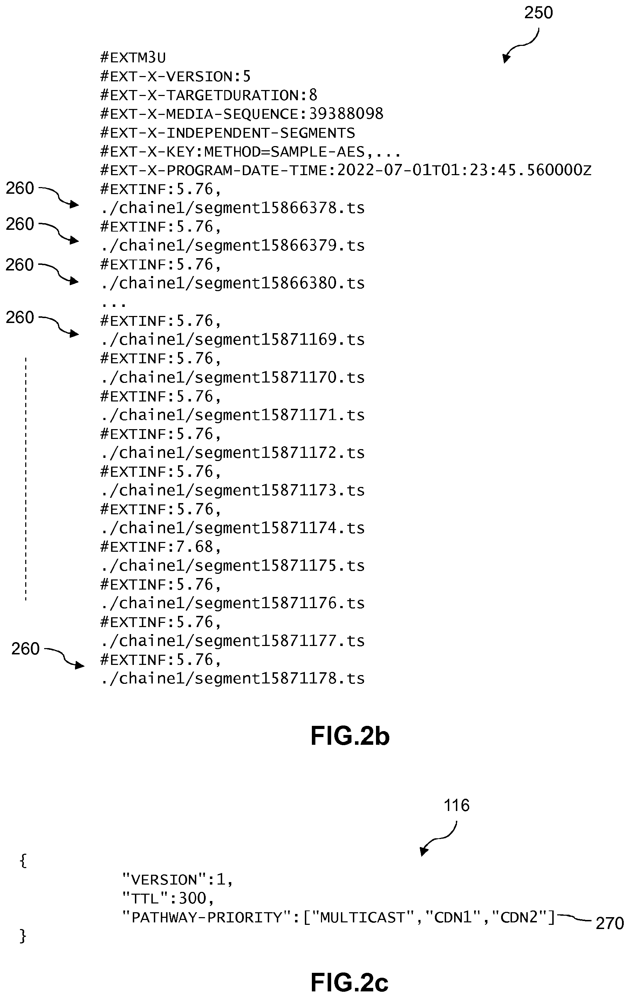

**La** **Figure 2b** illustre un exemple de fichier descriptif « m3u8 » simplifié 250. Il comprend un grand nombre d'éléments descriptifs 260 correspondant à des segments média respectifs, chaque élément descriptif précisant l'URL relative où est stocké le segment média correspondant. En d'autres termes, ce fichier est basiquement une playlist d'URLs.

Le dernier élément descriptif 260 correspond au dernier segment média « disponible » du streaming. Les éléments descriptifs précédentes correspondent aux segments média « antérieurs ». Leur présence dans le fichier descriptif 250 offre la possibilité au lecteur vidéo utilisateur d'un retour en arrière « startover ». La profondeur de « startover » (donc le nombre d'éléments descriptifs indiqués) est ajustable.

Les fichiers descriptifs 200, 250 sont obtenus par un lecteur vidéo utilisateur sur requêtes auprès du serveur 114. De façon connue, le lecteur vidéo utilisateur demande le fichier descriptif racine 200 d'une chaîne ou service multimédia auquel il accède, sélectionne l'une des qualités/résolutions souhaitées (selon différents critères) et demande le fichier descriptif 250 du contenu correspondant. C'est alors qu'il peut solliciter le CDN 120 (requêtes unicast) pour obtenir les segments successifs.

Le serveur de fichiers descriptifs 114 stocke également des fichiers descriptifs de pilotage ou « Content Steering » 116. Le mécanisme de Content Steering est décrit par exemple dans le fichier
https ://developer.apple.com/streaming/HLSContentSteeringSpecification.pdf.
Il permet, entre autres, de prioriser l'accès à un CDN 120 plutôt qu'à l'autre.

Le fichier Content Steering 116 opère en collaboration avec un attribut dénommé « PATHWAY-ID » indiqué au niveau des pistes du fichier descriptif racine 200 afin de prioriser une piste sur une autre piste identique en terme de résolution/qualité/etc., et de façon indirecte de prioriser un CDN 120 (mentionné dans le fichier m3u8 de la piste) sur un autre CDN 120 (mentionné dans le fichier m3u8 de l'autre piste équivalente). En d'autres termes, l'attribut « PATHWAY-ID » n'est autre qu'un attribut de priorisation des pistes, et donc indirectement des chemins vers les CDNs 120.

Le nom du fichier Content Steering 116 à récupérer pour un service multimédia donné (donc pour un fichier manifest racine 200) et l'URL où le récupérer sont précisés dans l'élément descriptif 210 en tête du fichier manifest racine 200 **(****Figure 2a****).**

La **Figure 2c** illustre un exemple de fichier Content Steering, lequel la liste 270 déclare l'attribut « CDN1 » comme étant plus prioritaire que l'identifiant « CDN2 ».

Aussi, lorsque, comme illustré sur la **Figure 2a****,** deux contenus très haute résolution FHD (pistes 232 et 233) sont déclarés avec des attributs PATHWAY-ID 242, 243 différents, l'un égal à « CDN1 » et l'autre à « CDN2 », le lecteur vidéo utilisateur exploitant ce fichier descriptif racine 200 doit prioriser le contenu 232 (« CDN1 ») plutôt que le contenu 233 (« CDN2 »), en récupérant le fichier descriptif 250 associé « chaine1_FHD_cdn1.m3u8 ». Bien entendu, d'autres noms que « CDN1 » et « CDN2 » peuvent être utilisés puisqu'il s'agit uniquement d'identifiant repris dans la liste 270 pour définir un ordre.

A noter qu'en l'absence de fichier Content Steering 116, un attribut est défini par défaut comme prioritaire, au sein de l'élément descriptif 210. Dans l'exemple, « CDN1 » est l'attribut par défaut des pistes prioritaires. En variante (e.g. en l'absence d'un tel attribut par défaut, ou si celui-ci n'est pas présent dans des pistes alternatives), l'ordre des pistes dans le fichier descriptif racine 200 peut être pris comme ordre de priorité par défaut.

Le fichier Content Steering 116 est avantageusement mis à jour dans le temps, par exemple pour orienter certains lecteurs vidéo utilisateurs vers un CDN 120 plutôt que l'autre, et ainsi équilibrer la charge entre CDNs. Le fichier Content Steering 116 étant obtenu par le lecteur vidéo utilisateur sur requête, il peut aisément être personnalisé à un lecteur particulier ou un groupe de lecteurs, pour prioriser ou non le flux unicast converti sur les flux unicast natifs. Typiquement, un lecteur vidéo utilisateur recharge le fichier Content Steering 116 à intervalle régulier, tel qu'indiqué dans l'élément TTL (300 secondes soit 5 minutes dans l'exemple de la Figure).

Le même format de fichier Content Steering 116 est utilisé dans le protocole HLS et le protocole DASH, seuls les attributs PATHWAY-ID étant définis à des emplacements différents dans les fichiers descriptifs de contenu 115. En DASH, il peut être défini dans chaque balise <BaseURL> précisant l'URL de base d'un CDN, comme cela est proposé dans la contribution DASH « Content Steering for DASH », version 0.9.0 en date du 10 juillet 2022, disponible sur https://dashif.org/docs/DASH-IF-CTS-00XX-Content-Steering-Community-Review.pdf. A nouveau, le PATHWAY-ID permet de prioriser différents chemins aux contenus.

De retour à la **Figure 1****,** les CDNs 120 sont des infrastructures classiques basées sur HTTP, typiquement des serveurs standard DASH ou HLS sécurisés (donc HTTPs). Ils réalisent une diffusion/streaming unicast des contenus, c'est-à-dire qu'ils délivrent les segments médias aux lecteurs vidéo utilisateurs sur requêtes.

Les requêtes et segments média renvoyés transitent au travers du réseau public de communication 130 typiquement le réseau Internet, possiblement via un autre réseau de communication, par exemple un réseau de téléphonie mobile 140 pour le cas où le lecteur vidéo utilisateur équipe un terminal utilisateur de type téléphone connecté au réseau 140.

L'accès aux différents serveurs du système de streaming vidéo adaptatif hybride 100, typiquement les CDNs 120 et le serveur de manifest 114, pour récupérer les fichiers descriptifs (manifests) et les segments média de contenu peut être sécurisé. Notamment, la sécurisation peut être réalisée au travers de jetons d'accès (« access tokens » en langue anglo-saxonne) que les utilisateurs (dispositif utilisateur ou lecteur vidéo utilisateur) récupèrent auprès d'un serveur de jetons (non illustré) et soumettent aux serveurs 120 et 140 lorsqu'ils y accèdent pour authentification.

Les jetons sont obtenus après identification de l'utilisateur et donnent un accès continu (authentification continue) à un service/serveur pendant la durée de validité du jeton.

En utilisation, le jeton obtenu par l'utilisateur peut être joint à la requête d'accès (au serveur 120 ou 140), par exemple au niveau du « host » (hôte), « path » (chemin), « query param » (paramètre de requête, généralement situés après le caractère '?'), « header » (entête) ou « payload » (données utiles) d'une requête http.

La **Figure 1** illustre trois abonnés 150 pour des raisons de clarté, bien qu'il puisse y en avoir un nombre différent. A titre d'exemple, un fournisseur d'accès internet peut gérer un parc de plusieurs millions d'abonnés.

Un environnement d'abonné 150 constitue un réseau local relié au réseau Internet 130 par une passerelle physique 151, typiquement une box Internet. Le réseau local peut alors accueillir une multitude de terminaux utilisateurs 152, chacun équipé d'un lecteur vidéo. Pour la suite, on assimile « environnement d'abonné » et « réseau local » sous la même référence 150.

Un terminal utilisateur 152 peut prendre la forme d'un téléphone intelligent (smartphone), d'une tablette, d'un ordinateur portable ou de bureau, d'un objets connecté (télévision, montre, appareil photo, etc.). Un terminal utilisateur 152 est relié au réseau local par liaison filaire (câble Ethernet) ou sans-fil (wifi). Un terminal utilisateur 152, typiquement un téléphone ou une tablette, peut en outre être connectée au réseau de téléphonie mobile 140. Un tel terminal a donc la possibilité de basculer d'un réseau (local) à l'autre (mobile).

L'accès au service de streaming par les lecteurs vidéo utilisateurs peut se faire à l'aide d'une application dédiée de lecture exécutée sur le terminal utilisateur 152 ou au travers d'un navigateur web du terminal utilisateur 152 qui exécute ledit lecteur vidéo. Par exemple, un téléphone 152 connecté au réseau de téléphonie mobile 140 accède au service de streaming de façon classique par requêtes unicast vers le CDN (pour récupérer les fichiers manifest 115, 116 puis les segments média).

L'équipement 152 s'authentifie auprès du CDN, avec un jeton d'accès, en joignant ce dernier dans la ou les requêtes de fichiers manifest puis de segments média (pour le cas où deux serveurs soient sollicités), comme expliqué ci-dessus.

Les lecteurs vidéo étant uniquement unicast, les flux multicast diffusés par le packageur 113 sont convertis localement en flux unicast et mis à disposition, sur le réseau local, au travers d'un serveur web local unicast. A cet effet, un agent passerelle est mis en oeuvre sur le réseau local.

Cet agent passerelle est une brique logicielle exécutée sur n'importe quel équipement du réseau local (en aval de la passerelle physique 151), typiquement dans un boitier fixe (borne wifi, box TV) ou dans un des terminaux utilisateurs 152. Il a accès au réseau Internet 130 et au réseau local 150. Pour simplifier les explications dans la suite, cet agent passerelle est considéré comme mis en oeuvre dans la passerelle physique 151. Aussi, le terme « passerelle » est utilisé comme équivalent de l'agent passerelle selon l'invention.

Comme exposé plus haut, l'invention s'intéresse à une gestion aisée, par l'agent passerelle, des flux multicast afin de permettre leur accès sur le réseau local 150 par les terminaux utilisateurs 152, tout en assurant une transition vidéo douce (sans coupure vidéo) lorsque le terminal utilisateur quitte le réseau local 150 pour se connecter au réseau mobile 140.

Pour ce faire, le serveur web local est exposé sur le réseau local avec un nom de domaine dédié, lequel ne sera pas exposé publiquement. Cela permet de référencer, dans les fichiers manifest 115, les flux unicast convertis, sur ce nom de domaine. Ce nom de domaine peut être quelconque, géré ou non par le fournisseur de service de streaming, ou correspondre à un nom de domaine du fournisseur d'accès (FAI). Notamment, le serveur web local sous ce nom de domaine fourni par le fournisseur d'accès peut être protégé par SSL (pour Secure Sockets Layer), en équipant par exemple la passerelle d'un certificat d'une autorité de certification qui est partagé avec d'autres passerelles d'autres utilisateurs.

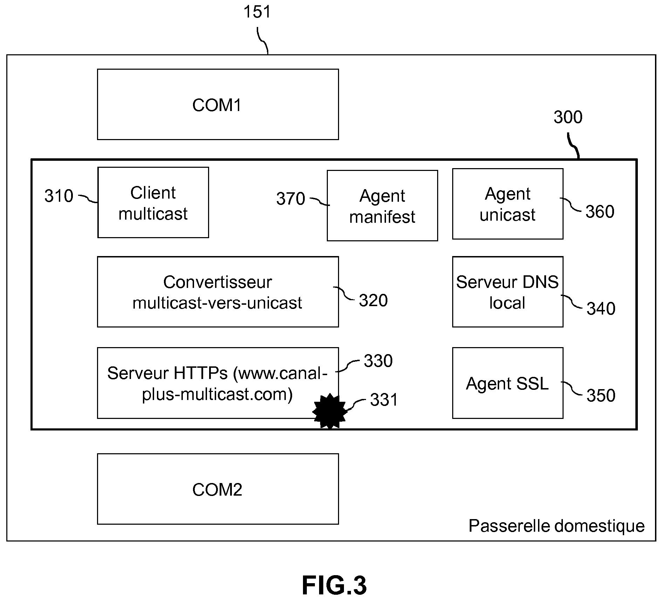

**La** **Figure** 3 illustre les fonctions d'une passerelle domestique 151 équipée de l'agent passerelle 300. L'agent passerelle décrit ici peut, en variante, équiper un autre dispositif du réseau local de l'abonné.

De façon classique, la passerelle domestique 151 comprend, outre l'agent passerelle 300, une interface de communication COM1 permettant de communiquer sur le réseau Internet 130 et une interface de communication COM2 interfacée sur le réseau local. L'interface COM2 peut matériellement être constituée de plusieurs interfaces physiques (plusieurs ports Ethernet, une borne wifi, etc.). Ainsi, la passerelle domestique 151 réalise le routage de paquets IP entre le réseau 130 et le réseau local.

L'agent passerelle 300 comporte un client multicast 310, un convertisseur multicast-vers-unicast 320, un serveur web 330, un serveur DNS local 340, un agent SSL 350, un agent unicast 360 et un agent manifest 370. Ces différents modules peuvent avantageusement être mis en oeuvre de façon logicielle (briques logicielles).

Le client multicast 310 est abonné (selon des techniques classiques) à un ou plusieurs flux multicast diffusés par le module 113. En régime permanent, il récupère les datagrammes successivement transmis pour chaque flux multicast auquel il est abonné. Un tel client est déjà connu et n'est donc pas décrit plus en détails. Notamment, des mécanismes classiques d'abonnement à un flux multicast sont avantageusement mis en œuvre.

Les datagrammes ainsi obtenus alimentent le convertisseur 320, lequel les convertit en segments média conforme à un streaming (local) unicast. A nouveau, cette conversion est déjà connue et n'est donc pas décrite plus en détails.

Les segments média sont alors stockés au sein du serveur web 330 qui les met à disposition sur le réseau local. Le serveur web 330 est monté par l'agent passerelle 300 avec un nom de domaine dédié et peut être un simple serveur standard DASH ou HLS à vocation locale uniquement.

Le nom de domaine dédié, le nom de domaine entièrement qualifié (FQDN) « www.canal-plus-multicast.com » dans l'exemple, permet de dissocier l'adresse IP locale de la passerelle 151 de l'adressage du serveur web local 330. Aussi, ce même nom de domaine peut être utilisé pour le serveur web local 330 de chacun des réseaux locaux d'abonné 150.

L'exposition du serveur web sous ce nom de domaine dédié, au sein du réseau local, est rendue possible par son enregistrement (en association avec l'adresse IP locale de la passerelle 151) dans le serveur DNS local 340, instancié par l'agent local. La table ci-dessous illustre un exemple d'enregistrement DNS pour le serveur web local 330 disponible localement à l'adresse IP 192.168.1.1 de la passerelle domestique 151.

| FQDN | TTL | Type | Classe | RData |
|---|---|---|---|---|
| www.canal-plus-multicast.com | 3600 | A | Internet | 192.168.1.1 |

Optionnellement, le nom de domaine dédié est également enregistré dans un (ou plus) autre serveur DNS local instancié dans le réseau local de l'abonné 150. Ainsi, toute requête émise par un terminal utilisateur 152 vers ce nom de domaine sera re-routé, au sein du réseau local, vers le serveur web 330.

De façon correspondante, l'usage du serveur web 330 n'étant que local, le nom de domaine dédié n'est pas exposé publiquement, c'est-à-dire sur le réseau Internet 130. Cela est possible en réservant le nom de domaine sans l'enregistrer dans les serveurs DNS du réseau 130.

Si le serveur web local peut être un simple serveur HTTP (par exemple s'il est mis en œuvre directement dans une application mobile de streaming - dans un terminal utilisateur 152), il est de préférence monté en serveur HTTPs, c'est-à-dire sécurisé, idéalement HTTPs/2 ou HTTPs/3 avec TLS 1.3 ou ultérieur. Pour ce faire, la passerelle 151 peut être pourvue d'un certificat 331, typiquement SSL (pour Secure Sockets Layer) ou TLS (pour Transport Layer Security), délivré par une autorité de certification publique pour le nom de domaine utilisé. Ce même certificat 331 équipera toutes les passerelles des abonnés 150 utilisant le même nom de domaine. C'est pourquoi ce dernier n'est pas exposé publiquement.

L'autorité de certification publique utilisée a de préférence une autorité racine incluse dans le magasin de certificats des navigateurs web et systèmes d'exploitation du marché. C'est le cas par exemple de Let's Encrypt (nom commercial) pour la génération de certificats SSL ou TLS. De la sorte, un utilisateur n'a pas à valider le certificat public associé au nom de domaine utilisé, lorsqu'il accède au serveur web local 330 par son nom de domaine dédié.

La gestion du certificat public que doivent récupérer les terminaux utilisateurs 152 sur le réseau local 150 est réalisée par l'agent SSL 350. En particulier, l'agent SSL 350 est également en charge du protocole de renouvellement des certificats, par exemple le protocole ACME (pour Automatic Certificate Management Environment) dans le cas Let's Encrypt, afin que les certificats soient automatiquement et régulièrement renouvelés au sein du réseau local 150.

Dans un mode de réalisation, l'accès au serveur web local 330 est protégé par jeton de façon similaire aux serveurs publics du système 100. Un lecteur multimédia utilisateur souhaitant l'accéder peut s'authentifier, par jeton d'accès, en fournissant ledit jeton dans la requête de segments média auprès du serveur web local.

L'agent unicast 360 optionnel est configuré pour récupérer, en unicast auprès du CDN 120, un contenu que le client multicast 310 n'a pu récupérer, typiquement lors du démarrage de l'agent passerelle 300 et donc du client multicast 310, ou lors de défaillances du client multicast 310 (pertes de paquets, segments absents). En effet, la diffusion unicast permet d'initier une session utilisateur (dit « zapping ») plus rapidement que la récupération des datagrammes du flux multicast, et permet de récupérer des ressources qui auraient déjà été diffusées en multicast, ou comportant un trop grand nombre d'erreurs de transport.

Dans un mode de réalisation, l'agent unicast 360 récupère au préalable tout jeton d'accès lui permettant d'accéder aux CDN 120 comme décrit plus haut. Le jeton d'accès (à renouveler) peut être obtenu directement auprès du serveur de jetons (non représenté) ou auprès de l'utilisateur (donc du lecteur vidéo utilisateur). Le jeton d'accès pour l'agent unicast 360 peut être le même que celui du lecteur vidéo pour accéder directement au CDN 120. En variante, et pour une sécurité accrue, l'agent unicast 360 utilise un jeton qui lui est propre (que l'utilisateur peut récupérer auprès du serveur de jetons pour le compte de l'agent unicast 360, et lui communiquer par la suite).

L'agent manifest 370, également optionnel, permet, quant à lui, de récupérer les fichiers manifest afin que l'agent unicast 360 sollicite le CDN 120 de façon appropriée pour récupérer le contenu souhaité, c'est-à-dire qu'il doit trouver la piste de contenu unicast natif de même qualité/résolution/etc. que celle du flux multicast à suppléer.

Dans un mode de réalisation, l'agent manifest 370 récupère au préalable tout jeton d'accès lui permettant d'accéder au serveur de manifest 114 comme décrit plus haut. Le jeton d'accès (à renouveler) peut être obtenu directement auprès du serveur de jetons (non représenté) ou auprès de l'utilisateur (donc du lecteur vidéo utilisateur). Le jeton d'accès pour l'agent manifest 370 peut être le même que celui du lecteur vidéo pour accéder directement au serveur de manifest 114. En variante, et pour une sécurité accrue, l'agent manifest 370 utilise un jeton qui lui est propre (que l'utilisateur peut récupérer auprès du serveur de jetons pour le compte de l'agent manifest 370, et lui communiquer par la suite).

L'agent manifest 370 peut être omis lorsque l'agent unicast 360 est capable de connaître l'URL de récupération d'un segment média manquant. A titre d'exemple, l'URL de récupération peut être basée sur celle d'une requête unicast reçue par l'agent passerelle 300 depuis le lecteur vidéo utilisateur 152, dans laquelle le chemin de base vers le serveur web local 330 est remplacé par un chemin par défaut (prédéfini) ou par le chemin d'un serveur de remplacement ou récupération indiqué dans la requête unicast reçue du lecteur vidéo utilisateur.

Le nom de domaine dédié est utilisé par le centre de préparation de streaming 110 pour préparer les fichiers descriptifs de contenu 115. Notamment, ces fichiers 115 référencent le flux unicast converti, sur ce nom de domaine. En d'autres termes, les fichiers manifest référençant les segments média « multicast » du flux unicast converti sont accessible sur le réseau public de diffusion unicast CDN, bien que référençant un serveur accessible uniquement localement. Une telle configuration se distingue des techniques classiques.

Ainsi, les lecteurs vidéo utilisateurs obtenant ces fichiers descriptifs de contenu 115 et souhaitant accéder à la piste du flux unicast converti (issu du multicast) enverront leurs requêtes unicast vers ce nom de domaine, et par conséquent vers le serveur web 330.

Un même et unique référencement est donc utilisé pour plusieurs abonnés 150, sans que l'agent passerelle 300 n'ait à adapter les fichiers descriptifs de contenu 115 au serveur web local 330.

De retour à la **Figure 2a**, la piste 234 déclare également un contenu vidéo en très haute résolution (1920x1080), donc de même résolution/qualité que celui des pistes 232 et 233, dont un détail des segments média est fourni dans le fichier « chaine1_FHD_multicast.m3u8 ». Ainsi, le fichier manifest racine 200 déclare en double (ou plus) la piste disponible en multicast, sur le domaine unicast natif (via les pistes 232/233) et sur le domaine unicast converti local (via la piste 234).

La piste 234 des segments média « multicast » est par ailleurs affectée de l'attribut 244 PATHWAY-ID « MULTICAST » (bien entendu, d'autres noms sont possibles). Cet attribut permet au système de streaming 100, via les fichiers Content Steering 116, d'orienter un ou plusieurs lecteurs vidéo utilisateur vers la piste 234 issue du flux multicast ou vers l'une des pistes unicast natives 232, 233. L'exemple de la **Figure 2c** priorise d'ailleurs le flux/piste multicast 234 sur les flux/pistes unicast 232, 233.

Il est à noter que le fichier Content Steering est compatible avec un système de streaming 100 dans lequel les réseaux locaux 150 (ou des sous-groupes) utilisent un nom de domaine dédié différent (par exemple fournis par des FAI différents). Dans ce cas, le fichier manifest racine 200 déclare une piste équivalente pour chaque nom de domaine différent (donc indique différents fichiers « m3u8 »), et chaque piste peut avoir un attribut PATHWAY-ID différent, par exemple « MULTICAST1 », « MULTICAST2 », etc. Alors la simple déclaration de ces multiples valeurs d'attribut dans la liste 270 du fichier Content Steering suffit. Par exemple, la liste « MULTICAST1,MULTICAST2,...,MULTICASTN,CDN1,CDN2 » permet de prioriser le flux unicast converti dans chaque réseau local. En effet, les pistes estampillées « MULTICASTx » ne correspondant pas au réseau local (donc avec le nom de domaine idoine) seront ignorées jusqu'à sélectionner la piste correspondant au réseau local du lecteur vidéo.

Dans un mode de réalisation, le fichier manifest racine 200 ne comporte initialement aucune piste 234 des segments média « multicast » pour le ou les noms de domaine envisagés. L'ajout de cette piste peut être effectué à la volée au niveau du fichier Content Steering 116 à l'aide de la fonction Pathway Cloning (décrite en section 7.2 du document « HTTP Live Streaming 2nd Edition draft-pantos-hls-rfc8216bis-13 » du 10 mai 2023).

Par exemple, le serveur de manifest 114 peut être notifié du lancement du client multicast 310 et n'inclure cette piste qu'après notification. De façon réciproque, la piste peut être supprimée à réception d'une notification d'arrêt du client multicast 310. Une gestion peut être réalisée par environnement utilisateur 150 de sorte à maintenir ladite piste dans le fichier Content Steering 116 tant qu'au moins un client multicast 310 de cet environnement est actif.

Ce comportement dynamique permet par exemple de modifier dynamiquement une piste de flux unicast converti, d'un nom de domaine à l'autre lorsque le terminal utilisateur 152 passe d'un environnement utilisateur (un domicile) à un autre. Il permet également d'introduire, sans gêne pour l'utilisateur, un nouveau contenu en multicast, par exemple pour ajuster la charge des CDNs : à titre d'exemple, une chaîne diffusée dans un flux multicast peut être modifiée de la chaîne A à la chaîne B, auquel cas la modification dynamique permet de basculer dynamiquement les spectateurs de la chaîne A du flux multicast vers un flux unicast et inversement les spectateurs de la chaîne B d'un flux unicast vers le flux multicast transportant désormais cette chaîne.

Il est à noter également que le téléphone 152 connecté au réseau de téléphonie mobile 140 et non au réseau local 150 est dans l'impossibilité de se connecter au serveur web local 330. Aussi, si le fichier descriptif racine 200 l'invite à utiliser de façon prioritaire la piste multicast 234, comme celle-ci ne lui est pas accessible, il utilise la piste de priorité suivante, à savoir la piste 232 correspondant au label PATHWAY-ID « CDN1 ».

Le lecteur vidéo d'un terminal utilisateur 152 relié au réseau local 150 peut en revanche accéder à la piste multicast 234. Il récupère alors, du serveur de manifest 114, le fichier « chaine1_FHD_multicast.m3u8 » correspondant à cette piste.

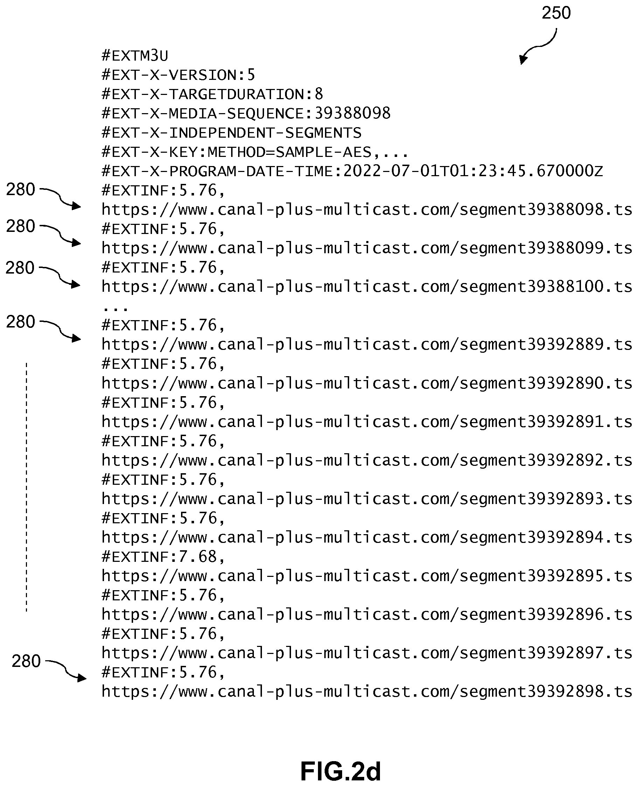

La **Figure 2d** illustre un exemple du fichier descriptif « chaine1_FHD_multicast.m3u8 » associé à la piste multicast 234, dans une version simplifiée, sur le même schéma que le fichier de la **Figure 2b****.**

Comme cela ressort des éléments descriptifs 280, l'URL d'accès à chaque segment média du flux unicast converti (issu du flux multicast) est indiqué sur le nom de domaine « www.canal-plus-multicast.com » affecté au serveur web local 330. Les segments média de cette piste 234 issue du flux multicast seront donc récupérés sur ce serveur web local.

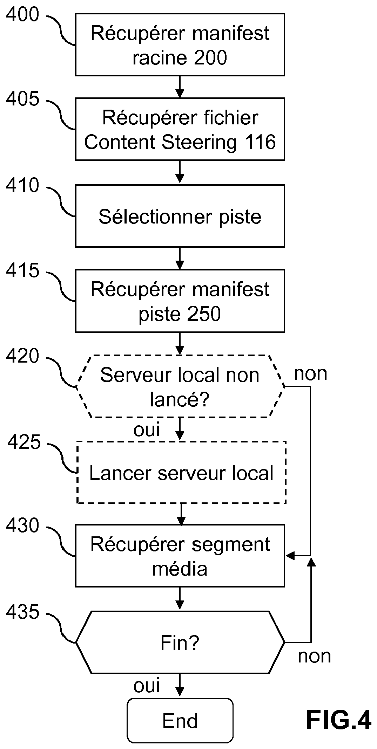

La **Figure 4** illustre schématiquement des étapes générales de streaming au niveau d'un lecteur vidéo utilisateur équipant un terminal utilisateur 152 selon un ou plusieurs modes de réalisation. Ces opérations sont applicables que le terminal utilisateur 152 soit connecté au réseau local 151 (et donc ait accès au serveur local web 330) ou non. Le procédé décrit débute lorsque le lecteur vidéo bascule sur un nouveau service multimédia (e.g. une nouvelle chaîne).

A l'étape 400, le lecteur vidéo envoie une requête au serveur de manifest 114 pour récupérer le fichier manifest racine 200 du service multimédia. Une authentification par jeton peut être mise en place (par exemple en ajoutant le jeton dans la requête). Toujours à l'étape 400, il obtient ce fichier 200.

Après lecture de l'élément descriptif 210, à l'étape 405, le lecteur vidéo envoie une requête au serveur de manifest 114 pour récupérer le fichier Content Steering 116 du service multimédia. Toujours à l'étape 405, il obtient ce fichier 116.

La requête reçue permet au serveur de manifest 114 de connaître l'adresse IP publique de l'utilisateur (donc la passerelle domestique 151) et le service multimédia souhaité.

Dans un mode de réalisation, à réception de la requête, le serveur de manifest 114 peut envoyer une indication, au gestionnaire de passerelles 160, de démarrer le client multicast 310 approprié de l'utilisateur. Il peut s'agir d'une requête de démarrage du client multicast 310 correspondant au service multimédia, de l'agent passerelle 300 localisé à l'adresse IP publique obtenue. Cette requête au gestionnaire 160 contient donc ces informations (adresse IP publique et service multimédia souhaitée), par exemple passées en paramètres dans l'adresse URL. En réponse à cette requête, le gestionnaire 160 envoie une instruction à l'agent passerelle 300 de démarrer le client multicast 310 gérant le ou les flux multicast du service multimédia souhaité.

Ce mode de réalisation permet notamment au serveur de manifest 114 (ayant connaissance de quand le client multicast 310 sera lancé) de favoriser les flux unicast natifs sur les flux unicast convertis avant que le serveur web local 330 soit pleinement opérationnel (c'est-à-dire le client multicast 310 soit lancé). Pour ce faire, le fichier Content Steering 116 du service multimédia peut être spécifique à l'adresse IP publique (donc au réseau local 150 concerné) et déclarer un flux unicast natif (e.g. la piste 232) identique au flux unicast converti comme étant prioritaire sur le flux unicast converti (piste 234). C'est typiquement le cas si la liste 270 indique l'ordre suivant [CDN1,CDN2,MULTICAST]. Puis, en réponse à l'envoi de la requête d'activation du client multicast 310, le centre back-end 110 modifie le fichier Content Steering 116 de sorte à déclarer le flux unicast converti comme étant prioritaire. C'est typiquement le cas avec la liste 270 de la **Figure 2c**.

Le lecteur vidéo réalise alors, à l'étape 410, la sélection d'une piste, tenant compte des attributs (qualité, résolution, etc.) associés, de la priorisation des pistes du fichier Content Steering 116 (via les attributs PATHWAY-ID) et de critères propres diverses (état du réseau, taille de l'écran, etc.). La sélection d'une telle piste reste classique pour l'homme de l'art.

Cette sélection peut amener le lecteur à choisir la piste 234 du flux unicast converti, servi par le serveur web local 330.

A l'étape 415, le lecteur vidéo envoie une requête au serveur de manifest 114 pour récupérer le fichier manifest piste 250 correspondant à la piste sélectionnée, par exemple le fichier « chaine1_FHD_multicast.m3u8 » pour la piste 234. Toujours à l'étape 415, il obtient ce fichier 250.

A l'étape optionnelle 420 selon un mode de réalisation de l'invention, le lecteur vidéo détermine si le serveur cible pour cette piste est le serveur web local 330 et si l'agent passerelle 300 n'a pas encore lancé le client multicast 310 gérant le flux multicast correspondant à cette piste. La détermination du serveur web local peut être basée sur les URLs renseignées dans le fichier 250. La détermination du lancement du client multicast 310 peut être basée sur un historique de sollicitation ou sur un message d'état diffusé par l'agent passerelle 300 sur le réseau local. Dans l'affirmation, le lecteur vidéo peut envoyer (étape 425), à l'agent passerelle 300, une requête de démarrage du client multicast 310 gérant le flux multicast correspondant à cette piste. La requête peut indiquer ladite piste.

En variante, la détermination peut être basée sur l'attribut PATHWAY-ID de la piste sélectionnée, tel qu'indiqué dans le fichier manifest racine 200. S'il est égal à « MULTICAST » pour la piste sélectionnée, alors l'étape 425 est exécutée. Dans cette variante, les étapes 420 et 425 peuvent être réalisées avant l'étape 415 de sorte à lancer au plus tôt le client multicast 310.

Dans un mode de réalisation, en cas de lancement du client multicast 310 sur initiative du lecteur vidéo, la prochaine requête d'obtention du fichier Content Steering 116 auprès du serveur de manifest 114 peut comprendre une indication du lancement du client multicast 310. Cette indication permet avantageusement au serveur de manifest 114 de favoriser les flux unicast natifs au détriment des flux unicast convertis avant que le serveur web local 330 ne soit pleinement opérationnel (c'est-à-dire le client multicast 310 soit lancé). Notamment, le fichier Content Steering 116 du service multimédia peut être spécifique à l'adresse IP publique (donc au réseau local 150 concerné) du lecteur vidéo et déclarer un flux unicast natif (e.g. la piste 232) identique au flux unicast converti comme étant prioritaire sur le flux unicast converti (piste 234). C'est typiquement le cas si la liste 270 indique l'ordre suivant [CDN1,CDN2,MULTICAST]. Puis, à détection de l'indication dans la requête d'obtention du fichier Content Steering, le centre back-end 110 modifie le fichier Content Steering 116 de sorte à déclarer le flux unicast converti comme étant prioritaire. C'est typiquement le cas avec la liste 270 de la **Figure 2c****.**

Dans la négative de l'étape 420, le procédé se poursuit à l'étape 430.

A l'étape 430, le lecteur vidéo envoie une requête unicast à l'URL du segment média souhaité, indiquée dans le fichier manifest piste 250 récupéré. Cette requête peut donc être à destination du serveur web local 330 pour un segment média du flux unicast converti ou à destination du CDN 120 pour un segment média d'un flux unicast natif. S'il s'agit d'une première requête au serveur web local 330, une authentification par jeton peut être mise en place (par exemple en ajoutant le jeton dans la requête). En variante, le jeton peut être inclus dans l'URL du fichier manifest (donc intégré au fichier manifest par le serveur de manifest 114 sur la base par exemple du jeton utilisé pour s'y authentifier). Toujours à l'étape 430, il obtient ce segment média qu'il peut afficher à l'utilisateur.

De façon continue, le lecteur vidéo recharge (415) le fichier manifest piste 250 depuis le serveur de manifest 114 pour connaître le segment média suivant, qu'il demande par requête unicast (430) auprès du serveur correspondant avant réception et affichage. Cela se poursuit jusqu'à un événement de fin (test 435). Un tel événement peut par exemple être un changement de conditions de streaming obligeant le lecteur à changer de piste (retour à l'étape 410 dans ce cas) ou être un changement de service multimédia (retour à l'étape 400 dans ce cas).

A noter également que le fichier Content Steering 116 étant récupéré de façon régulière, le lecteur peut reboucler à l'étape 405 à cette occasion, de sorte à évaluer si une piste différente (que la courante) doit être sélectionnée.

Ainsi, avec les mécanismes de l'invention, un lecteur vidéo utilisateur récupère un fichier manifest racine standard 200, lequel référence plusieurs réseaux de diffusion unicast de contenus, l'un d'entre eux étant le serveur web local 330. Selon le contenu du fichier Content Steering 116 récupéré, le lecteur vidéo utilisateur lit les segments vidéo issus soit d'un CDN classique (flux unicast natif) soit du serveur web local (flux unicast converti). En d'autres termes, l'invention permet d'utiliser des lecteurs vidéo conventionnels.

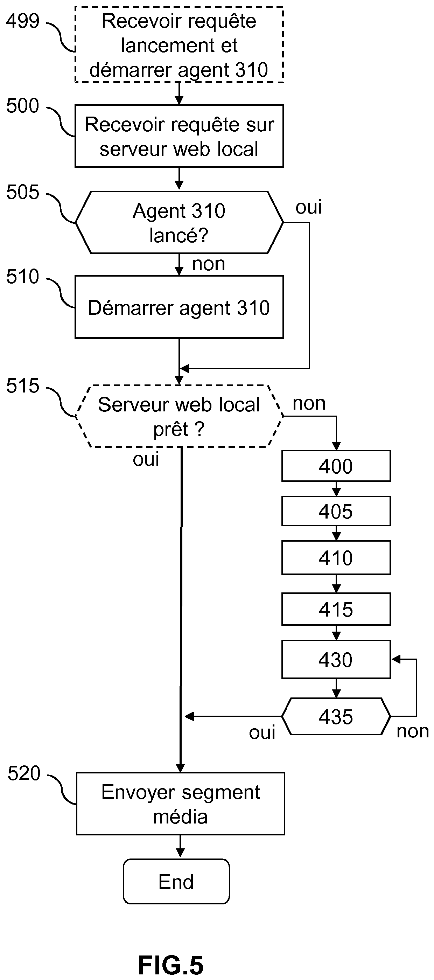

La **Figure 5** illustre schématiquement des étapes générales de fonctionnement de l'agent passerelle 300 pour la gestion du flux multicast, selon un ou plusieurs modes de réalisation.

Le streaming des flux unicast natif issus du CDN 120 vers les terminaux utilisateurs 152 n'implique pas l'agent passerelle 300. Aussi, ces étapes débutent lorsque l'agent passerelle reçoit (étape 500) une requête unicast d'un lecteur vidéo (par exemple authentifié par jeton d'accès) pour le flux unicast converti, servi par le serveur web local 330.

Dans un mode de réalisation (correspondant par exemple au cas de l'étape 425 ci-dessus ou à l'utilisateur du gestionnaire de passerelles 160), l'agent passerelle 300 peut avoir reçu (étape optionnelle 499) une requête de démarrage du client multicast 310 gérant le flux multicast d'une piste unicast converti souhaitée. Dans ce cas, l'agent passerelle démarre (étape 499 toujours) le client multicast 310. Sinon celui-ci est démarré à l'étape 510 en réponse à la requête de streaming unicast reçue à l'étape 500, s'il ne l'est pas déjà (test 505).

Lorsque le client multicast 310 est lancé, celui-ci écoute l'IP multicast du flux auquel il est abonné, démultiplexe et corrige les erreurs dans les datagrammes (via un code correcteur). La conversion de ces datagrammes reçus en segments média est réalisée en parallèle. Les segments média sont ensuite stockés dans le serveur web local 300 pour une durée limitée (fonction par exemple de la profondeur de « startover » proposée).

A l'étape 515, l'agent passerelle 300 détermine si le serveur web local 330 est prêt à délivrer le flux unicast converti. L'agent passerelle 300 détermine donc si le segment média converti demandé est disponible en mémoire cache du serveur web local 330. Cela peut ne pas être le cas, notamment au lancement du client multicast 310 car la récupération des bons datagrammes multicast par ce client 310, leur conversion en segments média par le convertisseur 320 et leur préparation dans le serveur web local 330 nécessite du temps.

Dans l'affirmative (typiquement si l'agent passerelle 300 reçoit et convertit depuis un bon moment le flux multicast), le serveur web local 330 retourne le segment média demandé à l'étape 520.

Dans la négative mais également à tout moment où une défaillance se produit sur le flux multicast (au niveau du client multicast 310 ou du convertisseur 320), le serveur web local 330 doit, tout de même, honorer la requête du lecteur vidéo. Une défaillance peut résulter de paquets perdus, de segments absents au moment d'un zapping/start over vers le flux unicast converti, ou même lorsque la chaine diffusée dans le flux multicast est changée et que le client n'a pas de fichier Content Steering (non disponible ou non récupéré à temps).

Pour ce faire, l'agent passerelle met en place une procédure de récupération du segment média sollicité par streaming unicast natif auprès du CDN 120, de façon similaire à ce qu'un lecteur vidéo réalise de façon classique **(****Figure 4****).**

Ainsi, à l'étape 400 déjà décrite ci-dessus, l'agent passerelle 300 récupère le fichier manifest racine 200 du service multimédia, puis à l'étape 405, le fichier Content Steering 116 correspondant. Ces étapes sont conduites par l'agent manifest 370. Ces deux fichiers lui permettent de sélectionner (410) la piste prioritaire alternative (même résolution/qualité/etc.) au flux unicast converti sollicité. Dans l'exemple des **Figures 2a** et **2c****,** l'agent passerelle 300 sélectionne la piste 232 labellisée « CDN1 » car première autre piste selon l'ordre de priorité défini dans le fichier Content Steering 116 (ou alternativement dans le fichier manifest racine 200).

En variante, le serveur de récupération peut être indiqué au niveau de la piste 234 du flux unicast converti, typiquement à l'aide d'un nouvel attribut (non illustré), dénommé ci-après « RECOVERY ». Par exemple, l'attribut « RECOVERY = CDN2 » dans la piste 234 indique à l'agent passerelle 300 qu'il convient de récupérer les segments manquants en unicast auprès du serveur CDN2. Il est ainsi possible de déclarer plusieurs serveurs de récupération en dupliquant la piste de flux unicast converti (donc la piste 234) avec des attributs « RECOVERY » différents : une première (selon le fichier Content Steering 116) piste 234 avec « RECOVERY = CDN2 » suivie d'une deuxième piste 234 avec « RECOVERY = CDN1 » favorise donc un flux unicast converti dont le serveur de récupération est le CDN2. Si pour des raisons de gestion de charge il est préférable de favoriser le CDN1, cela peut être aisément réalisé en intervertissant l'ordre de priorité des deux pistes 234 ainsi déclarées (par exemple dans le fichier Content Steering 116).

L'attribut peut également être prévu pour directement proposer une liste ordonnée (donc selon des priorités) de serveurs de récupération. Par exemple, « RECOVERY = CDN2, CDN1 » indique d'utiliser en priorité le serveur CDN2, puis le serveur CDN1 en cas d'indisponibilité ou défaillance du serveur CDN2.

A l'étape 415, il (via l'agent manifest 370) récupère alors le fichier manifest piste 250, « chaine1_FHD_cdn1.m3u8 » dans l'exemple, lui permettant d'identifier le segment média correspondant à celui visé par la requête de l'étape 500. Il peut alors obtenir (étape 430), via une requête unicast à l'URL indiquée dans le fichier manifest piste 250, ledit segment média sollicité. L'étape 430 est conduite par l'agent unicast 360.

Pour ces étapes 400-430, l'agent passerelle 300 peut s'authentifier auprès du serveur de manifest 114 (pour l'agent manifest 370) et auprès des CDN de récupération sollicités 120 (pour l'agent unicast 360). Le jeton d'accès utilisé peut être récupéré de l'utilisateur. Par exemple le terminal utilisateur 152 peut pousser, via une API (interface de programmation) de la passerelle et avant de la solliciter, un tel jeton obtenu auprès du serveur de jetons. En variante, le jeton peut être passé en paramètre de la requête de streaming unicast de l'étape 500.

Le jeton d'accès à fournir à la passerelle peut dépendre du CDN de récupération (CDN1 ou CDN2). Dans un mode de réalisation, la piste (multicast) de flux unicast converti 234 peut contenir le ou les jetons utiles pour l'authentification auprès des CDN 120 de récupération. Si deux pistes unicasts 232 et 233 sont prévues dans le manifest (par exemple **Figure 2a****),** la piste (multicast) de flux unicast converti 234 peut par exemple indiquer, dans un paramètre « TOKEN », les deux jetons pour les deux CDNs correspondant dans l'ordre du manifest :
#EXT-X-STREAM-INF:BANDWIDTH=5364655,RESOLUTION=1920x1080,AUDIO="audio96"
chaine1_FHD_multicast.m3u8,**PATHWAY-ID="MULTICAST",TOKEN="t*oken1,token2*"** où *token1* et *token2* sont les deux jetons pour les deux CDNs. Bien entendu, un seul jeton peut être renseigné le cas échéant lorsqu'un seul serveur de récupération est utilisé.

Il est à noter que la réparation de contenu à l'initiative de la passerelle (via les étapes 400-430) peut permettre une mutualisation de la réparation. Notamment, si plusieurs lecteurs vidéo d'un même réseau local 150 (environnement d'abonné) visionnent le même contenu multicast converti et que ce streaming unicast s'avère défectueux, une réparation de contenu peut être opérée unitairement par la passerelle pour chacun d'entre eux : la passerelle s'authentifie auprès du CDN avec chaque jeton d'accès obtenu des lecteurs vidéo en question et récupère chaque même segment média pour chacun d'entre eux avant de leur transmettre respectivement.

Pour réduire ce nombre d'accès au CDN, la passerelle peut être configurée pour réaliser un seul accès authentifié auprès du CDN pour récupérer qu'une seul fois chaque segment et le transmettre à l'ensemble des lecteurs concernés par la réparation.

D'autres variantes aux étapes 400-435 peuvent être mises en oeuvre. Par exemple, l'agent passerelle 300 peut être préconfiguré pour aller récupérer les segments média sur un serveur CDN dédié. Dans une autre variante, l'agent passerelle 300 peut récupérer, auprès d'un serveur de gestion, les URLs unicast où demander les segments média manquants.

Dans un mode de réalisation, l'agent passerelle 300 récupère, en unicast auprès du CDN 120, une pluralité de segments média (sur une profondeur définie) précédant le segment média sollicité afin d'offrir le mécanisme de « startover » au lecteur vidéo.

Suite à l'obtention 430 du segment média sollicité, celui-ci est envoyé, à l'étape 520, au lecteur vidéo comme réponse à sa requête initiale.

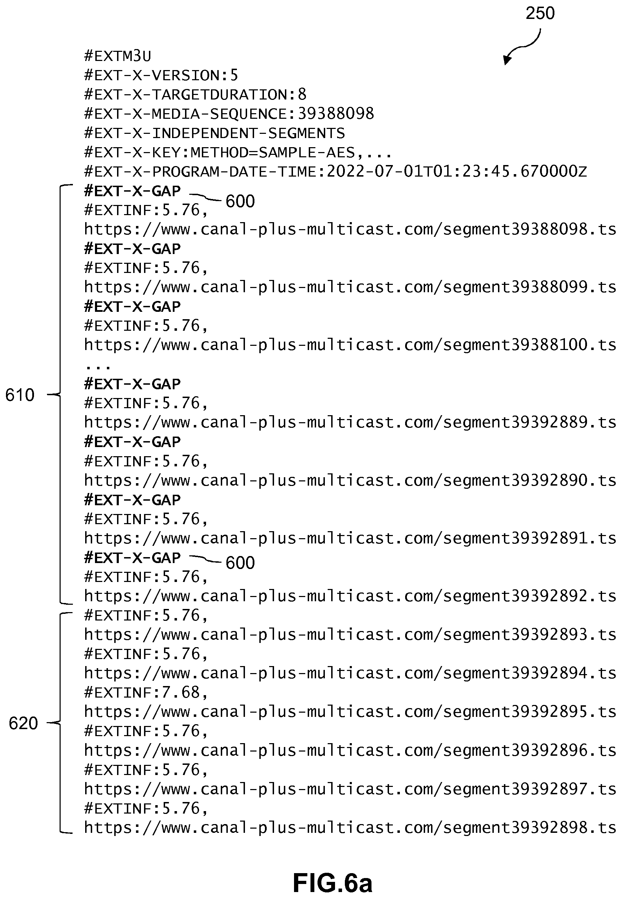

La **Figure 6a** illustre une variante de fichier manifest piste 250 correspondant au flux unicast converti, selon un ou plusieurs modes de réalisation. Dans cette variante, les segments média « startover » du flux unicast converti sont indiqués comme manquants afin de forcer le lecteur vidéo à réaliser le « startover » en flux unicast natif. Cette configuration permet notamment de réduire substantiellement les ressources de stockage nécessaire au niveau du serveur web local 330, en particulier lorsque l'agent passerelle 300 gère simultanément plusieurs flux multicast, et d'optimiser les performances, en utilisant une route « directe » vers les CDNs.

Comparativement au fichier de la **Figure 2d****,** certains éléments descriptifs (préférentiellement les plus anciens - donc les premiers listés dans le fichier) sont marqués par l'étiquette (tag) #EXT-X-GAP 600 décrite dans le standard HLS. Dans l'exemple illustré, seuls les six segments les plus récents sont accessibles sur le flux unicast converti servi par le serveur web local 330. Les autres (donc pour remonter plus loin dans le programme streamé) sont accessibles uniquement via un flux unicast natif. Le lecteur vidéo doit alors basculer sur le CDN 120 de priorité suivante comme défini dans le fichier manifest racine 200, pour obtenir, par unicast, ces autres segments « startover ».

Dans ce cas de redirection, la requête envoyée par le lecteur vidéo au CDN de réparation peut inclure son jeton d'accès, par exemple en tant que paramètre (query param). En particulier, le jeton peut être déjà inclus dans les URLs des pistes à l'intérieur du fichier manifest.

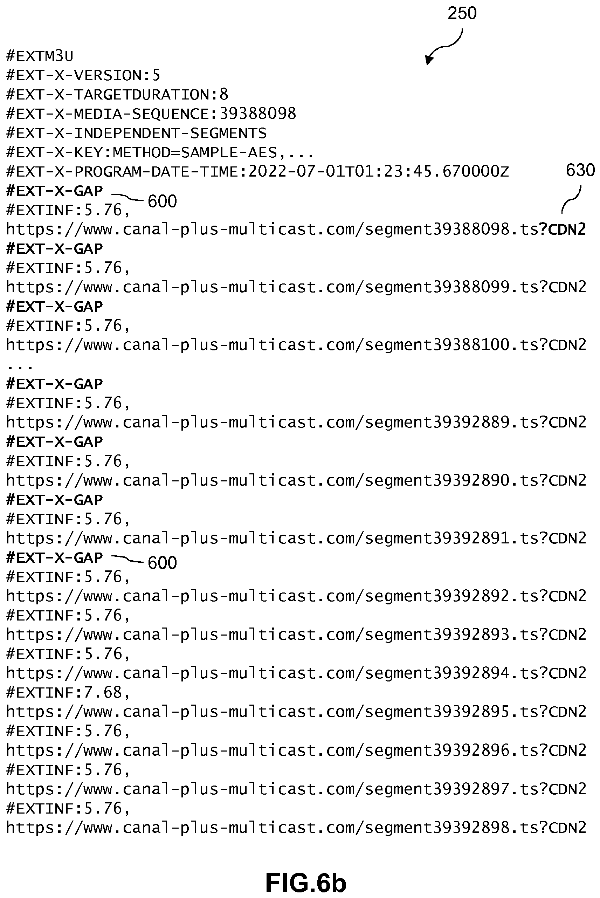

La **Figure 6b** illustre une autre variante de fichier manifest piste 250 correspondant au flux unicast converti, selon un ou plusieurs modes de réalisation. Dans cette variante qui se combine ou non avec le mode de réalisation de la **Figure 6a****,** le référencement, dans les fichiers manifest piste 250, du flux unicast converti sur le nom de domaine comprend une indication d'un serveur de remplacement, dans le réseau public de diffusion unicast de contenus, apte à servir un contenu identique au flux unicast converti.

Comme illustré, cette indication peut être incluse dans l'URL des segments média. Elle peut donc varier d'un segment média à l'autre ou désigner des CDNs différents d'un segment média à l'autre. L'indication 630 « ?CDN2 » de la Figure s'appuie sur l'attribut PATHWAY-ID et permet de désigner le CDN2 de la **Figure 1** par exemple. Bien entendu, des indications plus précises, par exemple une URL peut être utilisée. D'autres solutions pourraient être envisagées pour indiquer le CDN de réparation à utiliser.

En variante, l'indication peut être fournie en remplacement des tag #EXT-X-GAP 600 pour les segments média « startover » déclarés comme manquants, en y déclarant les média segments sur le CDN pour diffusion unicast native.

Aussi, en cas de segment média manquant ou d'absence de réponse à une requête unicast auprès du serveur web local 330, le lecteur vidéo utilisateur peut basculer (après authentification par exemple) sur le CDN2, i.e. récupérer le fichier manifest piste 250 correspondant à la piste (équivalente au flux unicast converti) estampillée « CDN2 » et demander, par unicast, les segments média auprès du CDN2.

Ce type de redirection conduit à ce que si plusieurs lecteurs vidéo d'un même réseau local 150 (environnement d'abonné) visionnent le même contenu multicast converti et que ce streaming unicast s'avère défectueux, ceux-ci doivent tous basculer sur un CDN de réparation pour récupérer le même contenu.

Cette indication permet donc de contourner les priorités définies dans le fichier Content Steering 116 applicable. Comme ce fichier peut être individualisé pour chaque réseau local 150, le centre back-end 110 peut ajuster dynamiquement la charge sur les différents CDNs 120.

L'exposition du serveur web local 330 sur le réseau local avec un nom de domaine dédié et le référencement, directement dans les fichiers manifest 115 d'origine et sous ce nom de domaine, du flux unicast converti permettent, en lien avec la priorisation sous fichier Content Steering, une bascule vidéo douce du flux unicast converti vers un flux unicast natif équivalent, ou l'inverse. Une bascule de flux s'avère parfois nécessaire, par exemple lorsque l'utilisateur visionnant un contenu (flux unicast converti) sur son téléphone à son domicile, quitte ce dernier, son téléphone basculant sur le réseau mobile 140 n'offrant plus d'accès au serveur web local 330.

La gestion des fichiers Content Steering 116 de plusieurs services multimédia (e.g. chaines) par le centre back-end 110 permet par ailleurs une bascule optimisée de contenu à l'intérieur d'un même flux multicast. Une telle bascule optimisée contribue à réduire la congestion réseau et la consommation électrique associée, d'autant plus qu'il est recherché de diffuser en multicast le contenu le plus regardé à un instant donné.

Par exemple, un événement sportif en direct sur une chaine 1 peut être regardé par une majorité d'utilisateurs. A la fin de cet événement live, les utilisateurs cessent de regarder la chaine 1 et/ou bascule sur une autre chaine. Le contenu diffusé sur une chaine 2 peut alors être celui avec la meilleure audience. Comme les ressources de diffusion multicast (e.g. les adresses IP multicast) sont rares, il est particulièrement intéressant de pouvoir basculer du contenu de la chaine 1 vers le contenu de la chaine 2 dans le flux multicast, sans impact vidéo pour les utilisateurs, tout en forçant les utilisateurs de la chaine multicastée sur leur flux unicast converti local.

Bien entendu, d'autres critères de bascule que la fin d'un événement live peuvent être mis en oeuvre. Par exemple, une mesure (statistiques) en direct de l'audimat des chaînes ou des connexions associées peut permettre d'adapter dynamiquement le contenu du flux multicast à la majorité d'utilisateurs. Typiquement, le contenu du flux unicast natif le plus demandé à un instant donné (e.g. dans les dernières minutes) dans le CDN 120 est basculé comme flux multicast.

Dans ce dessein, un ou plusieurs modes de réalisation de l'invention prévoient que les fichiers manifest racine 200 associés aux deux chaînes 1 et 2 déclarent tous les deux une piste (multicast) de flux unicast converti 234, en plus d'une piste de flux unicast natif 232/233. En d'autres termes, ces deux fichiers manifest racine comprennent le même référencement du flux unicast converti, sur le nom de domaine, bien qu'ils concernent deux chaines (et donc a priori deux contenus) différents. Aussi, à tout moment, les fichiers Content Steering 116 ne doivent indiquer le flux unicast converti (attribut PATHWAY-ID="MULTICAST") dans la liste 270, que pour la seule chaîne dont le contenu est diffusé dans le flux multicast.

En outre à l'approche du moment de bascule, le centre back-end 110 modifie le fichier Content Steering associé à la chaîne 1 de sorte à supprimer toute priorité au flux unicast converti. Le PATHWAY-ID="MULTICAST" est supprimé de la liste 270. Jusqu'à ce moment-là, les lecteurs vidéo sollicitant le contenu FHD de la chaine 1, lorsqu'ils sont sur un des réseaux locaux 150, récupèrent les segments média, par unicast auprès de leur serveur web local 330. Lorsqu'ils récupèrent le fichier Content Steering modifié, ils basculent sur un flux (équivalent) unicast natif auprès du CDN 120, car le PATHWAY-ID="MULTICAST" n'est plus prioritaire.

A ce moment-là, aucun fichier Content Steering 116 ne référence le PATHWAY-ID="MULTICAST". Aucun lecteur vidéo n'accède donc à son serveur web local 330.

Il est alors possible de changer le contenu du flux multicast en alimentant le convertisseur/empaqueteur 113 avec le nouveau contenu FHD de la chaine 2.

Puis, le centre back-end 110 modifie le fichier Content Steering associé à la chaîne 2 de sorte à déclarer une priorité (de préférence la plus haute priorité) au flux unicast converti. Le PATHWAY-ID="MULTICAST" est ajouté à la liste 270. Jusqu'à ce moment-là, les lecteurs vidéo sollicitant le contenu FHD de la chaine 2 n'y accèdent que par flux unicast natif auprès du CDN 120. Lorsqu'ils récupèrent le fichier Content Steering modifié et qu'ils sont sur un des réseaux locaux 150, ils basculent sur le flux (équivalent) unicast converti servi par le serveur web local 330, car le PATHWAY-ID="MULTICAST" est devenu prioritaire.

Comme il ressort de ce qui précède, l'invention permet par conséquent de gérer simplement un streaming MABR, chez un ou plusieurs abonnés d'un ou plusieurs fournisseurs d'accès Internet, sans coupure vidéo lors d'un changement de réseau d'un terminal utilisateur, compatible avec les lecteurs vidéo classiques.

## Revendications

1. Système de streaming vidéo adaptatif hybride (100) comprenant :
un équipement de diffusion (114) externe à un réseau local d'abonné (150), configuré pour diffuser des fichiers manifest (115, 116) descriptifs de contenus (111) accessibles auprès d'un réseau (120) public de diffusion unicast de contenus, et
au moins un agent passerelle (300) sur le réseau local d'abonné (150) auquel un lecteur vidéo utilisateur (152) accède, l'agent passerelle comprenant un convertisseur (320) de flux multicast en flux unicast et un serveur web local (330) mettant à disposition du lecteur vidéo utilisateur le flux unicast converti,
**caractérisé en ce que** le serveur web local (330) est exposé sur le réseau local d'abonné (150) avec un nom de domaine dédié, lequel est non exploité hors des réseaux locaux utilisateurs et différent du nom de domaine unicast public, et les fichiers manifest (115, 116) diffusés par l'équipement externe de diffusion (114) référencent le flux unicast converti, sur ce nom de domaine.

2. Système (100) selon la revendication 1, comprenant une pluralité d'agents passerelle (300) associés à une pluralité de réseaux locaux respectifs d'abonné (150) auxquels des lecteurs vidéo utilisateurs accèdent, et le serveur web local (330) de chaque agent passerelle est exposé avec le même nom de domaine.

3. Système (100) selon la revendication 1 ou 2, dans lequel le serveur web local est un serveur HTTPs.

4. Système (100) selon l'une des revendications précédentes, dans lequel l'équipement externe de diffusion (114) diffuse un fichier manifest de pilotage (116) définissant un ordre de priorité entre le flux unicast converti référencé sur le nom de domaine et un ou plusieurs contenus identiques référencés, dans les fichiers manifest descriptifs de contenus (115), sous un chemin différent.

5. Système (100) selon la revendication 4, dans lequel les fichiers manifest descriptifs de contenus (115) comprennent des attributs de priorisation (242, 243, 244) associés à des chemins différents incluant le nom de domaine, et le fichier manifest de pilotage (116) fournit une liste (270) ordonnée d'attributs de priorisation.

6. Système (100) selon la revendication 4 ou 5, dans lequel l'équipement de diffusion (114) est configuré pour déclarer, dans le fichier manifest de pilotage (116), un contenu alternatif au flux unicast converti comme étant prioritaire sur le flux unicast converti, et
à détection d'un événement de démarrage du serveur web local, pour modifier le fichier manifest de pilotage de sorte à déclarer le flux unicast converti comme étant prioritaire.

7. Système (100) selon la revendication 6, dans lequel l'équipement externe de diffusion (114) est configuré pour recevoir, du lecteur vidéo utilisateur (152), une requête d'obtention du fichier manifest de pilotage (116), la requête comprenant une indication de démarrage du serveur web local, et l'événement de démarrage du serveur web local comprend l'un parmi :
- la réception de l'indication de démarrage, et
- l'envoi, en réponse à la requête et à destination d'un gestionnaire (160) d'agents passerelle, d'une instruction de démarrage du serveur web local.

8. Système (100) selon l'une des revendications 4 à 7, dans lequel le fichier manifest de pilotage (116) est conforme au Steering Manifest défini dans la spécification « HLS Content Steering Specification, v1.2b1 ».

9. Système (100) selon l'une des revendications 4 à 8, dans lequel les fichiers manifest (115) comprennent une première piste référençant le flux unicast converti sur le nom de domaine et au moins une deuxième piste référençant le ou les contenus identiques sous un chemin différent vers un réseau (120) public de diffusion unicast de contenus, ladite première piste indiquant au moins un serveur de récupération parmi le ou les réseaux publics de diffusion unicast de contenus.

10. Système (100) selon l'une des revendications précédentes, dans lequel le référencement, dans les fichiers manifest descriptifs de contenus (115), du flux unicast converti sur le nom de domaine comprend une indication (630) d'un serveur de remplacement, dans le réseau (120) public de diffusion unicast de contenus, apte à servir un contenu identique au flux unicast converti.

11. Système (100) selon l'une des revendications précédentes, comprenant en outre un équipement (113) de diffusion multicast de contenu configuré pour basculer le contenu d'un flux multicast diffusé, depuis une première chaine vers une seconde chaine, système dans lequel les fichiers manifest descriptifs de contenus (115) comprennent, pour les deux chaînes, le même référencement du flux unicast converti, sur le nom de domaine, et l'équipement externe de diffusion (114) de fichiers manifest est configuré pour modifier un fichier manifest de pilotage (116) associé à la première chaîne avant ladite bascule de sorte à supprimer toute priorité au flux unicast converti, et pour modifier un fichier manifest de pilotage associé à la deuxième chaîne après ladite bascule de sorte à déclarer une priorité au flux unicast converti.

12. Dispositif (151, 152) comprenant un agent passerelle (300) apte à être connecté à un réseau local d'abonné (150) auquel un lecteur vidéo utilisateur (152) accède, le dispositif comprenant :
un agent multicast (310) apte à recevoir un flux multicast d'un réseau public externe au réseau local d'abonné (150), lequel réseau public externe diffuse des fichiers manifest (115, 116) descriptifs de contenus (111) accessibles auprès d'un réseau (120) public de diffusion unicast de contenus,
un convertisseur (320) du flux multicast en un flux unicast, et
un serveur web local (330) mettant à disposition du lecteur vidéo utilisateur le flux unicast converti,
**caractérisé en ce que** l'agent passerelle est configuré pour exposer le serveur web local (330) sur le réseau local d'abonné (150) avec un nom de domaine dédié, lequel est non exploité hors des réseaux locaux utilisateurs et différent du nom de domaine unicast public, référençant, dans les fichiers manifest diffusés par le réseau public externe, le flux unicast converti.

13. Procédé de streaming vidéo adaptatif hybride dans un système de streaming vidéo (100) comprenant un équipement de diffusion (114) externe à un réseau local d'abonné (150) et configuré pour diffuser des fichiers manifest (115, 116) descriptifs de contenus (111) accessibles auprès d'un réseau (120) public de diffusion unicast de contenus, et comprenant au moins un agent passerelle (300) sur le réseau local d'abonné (150) auquel un lecteur vidéo utilisateur (152) accède, le procédé comprenant les étapes suivantes :
convertir, par l'agent passerelle, un flux multicast en flux unicast, et
mettre à disposition du lecteur vidéo utilisateur, via un serveur web local (330) dans l'agent passerelle, le flux unicast converti,
le procédé étant **caractérisé en ce qu'**il comprend :
la configuration de l'agent passerelle (300) pour exposer le serveur web local (330) sur le réseau local d'abonné (150) avec un nom de domaine dédié, lequel est non exploité hors des réseaux locaux utilisateurs et différent du nom de domaine unicast public, et
la configuration de l'équipement externe de diffusion pour diffuser des fichiers manifest (115, 116) qui référencent le flux unicast converti, sur ce nom de domaine.

14. Support d'enregistrement non transitoire lisible par un ordinateur sur lequel est enregistré un programme pour la mise en oeuvre du procédé selon la revendication 13, lorsque ce programme est exécuté par un processeur.

## Patentansprüche

1. Hybrides adaptives Videostreamingsystem (100), umfassend:
eine externe Übertragungsausrüstung (114) eines lokalen Teilnehmernetzwerks (150), die so konfiguriert ist, dass sie Inhalte (111) beschreibende Manifestdateien (115, 116) überträgt, auf die über ein öffentliches Unicast-Netzwerk (120) für die Übertragung von Inhalten zugegriffen werden kann, und
mindestens einen Gateway-Agenten (300) im lokalen Teilnehmernetzwerk (150), auf den ein Benutzer-Videoplayer (152) zugreift, wobei der Gateway-Agent einen Multicast-Stream-in-Unicast-Stream-Konverter (320) und einen lokalen Webserver (330) umfasst, der dem Benutzer-Videoplayer den konvertierten Unicast-Stream zur Verfügung stellt,
**dadurch gekennzeichnet, dass** der lokale Webserver (330) auf dem lokalen Teilnehmernetzwerk (150) mit einem dedizierten Domänennamen exponiert ist, der nicht außerhalb der lokalen Benutzernetzwerke betrieben wird und sich vom öffentlichen Unicast-Domänennamen unterscheidet, und die von der externen Übertragungsausrüstung (114) übertragenen Manifestdateien (115, 116) den konvertierten Unicast-Stream auf diesen Domänennamen referenzieren.

2. System (100) nach Anspruch 1, umfassend eine Vielzahl von Gateway-Agenten (300), die mit einer Vielzahl von jeweiligen lokalen Teilnehmernetzwerken (150) verbunden sind, auf die Benutzer-Videoplayer zugreifen, und der lokale Webserver (330) jedes Gateway-Agenten mit demselben Domänennamen exponiert ist.

3. System (100) nach Anspruch 1 oder 2, wobei der lokale Webserver ein HTTPs-Server ist.

4. System (100) nach einem der vorhergehenden Ansprüche, wobei die externe Übertragungsausrüstung (114) eine Steuermanifestdatei (116) überträgt, die eine Prioritätsreihenfolge zwischen dem auf den Domänennamen referenzierten, konvertierten Unicast-Stream und einem oder mehreren identischen referenzierten Inhalten in den Inhalte beschreibenden Manifestdateien (115) unter einem anderen Pfad definiert.

5. System (100) nach Anspruch 4, wobei die Inhalte beschreibenden Manifestdateien (115) Priorisierungsattribute (242, 243, 244) umfassen, die mit verschiedenen Pfaden einschließlich des Domänennamens verbunden sind, und die Steuermanifestdatei (116) eine geordnete Liste (270) von Priorisierungsattributen bereitstellt.

6. System (100) nach Anspruch 4 oder 5, wobei die Übertragungsausrüstung (114) so konfiguriert ist, dass sie in der Steuermanifestdatei (116) einen alternativen Inhalt zum konvertierten Unicast-Stream als priorisiert auf dem konvertierten Unicast-Stream deklariert, und
bei Erkennung eines lokalen Webserver-Startereignisses, um die Steuermanifestdatei so zu ändern, dass der konvertierte Unicast-Stream als priorisiert deklariert wird.

7. System (100) nach Anspruch 6, wobei die externe Übertragungsausrüstung (114) so konfiguriert ist, dass sie vom Benutzer-Videoplayer (152) eine Anfrage zum Erhalt der Steuermanifestdatei (116) empfängt, wobei die Anfrage eine Startanzeige des lokalen Webservers umfasst, und das Startereignis des lokalen Webservers eines von Folgenden umfasst:
- Empfangen der Startanzeige, und
- Senden einer Startanweisung des lokalen Webservers als Antwort auf die Anfrage an einen Gateway-Agenten-Manager (160).

8. System (100) nach einem der Ansprüche 4 bis 7, wobei die Steuermanifestdatei (116) dem in der Spezifikation "HLS Content Steering Specification, v1.2b1" definierten Steering Manifest entspricht.

9. System (100) nach einem der Ansprüche 4 bis 8, wobei die Manifestdateien (115) einen ersten Track, der den über den Domänennamen konvertierten Unicast-Stream referenziert, und mindestens einen zweiten Track, der den oder die identischen Inhalte unter einem anderen Pfad zu einem öffentlichen Unicast-Inhaltsübertragungsnetzwerk (120) referenziert, umfassen, wobei der erste Track mindestens einen Wiederherstellungsserver unter dem oder den öffentlichen Unicast-Inhaltsübertragungsnetzwerken angibt.

10. System (100) nach einem der vorhergehenden Ansprüche, wobei das Referenzieren, in den Inhalte beschreibenden Manifestdateien (115), des auf den Domänennamen konvertierten Unicast-Streams eine Angabe (630) eines Ersatzservers in dem öffentlichen Netzwerk (120) für die Übertragung von Inhalten mit Unicast umfasst, der in der Lage ist, Inhalte zu bedienen, die identisch mit dem konvertierten Unicast-Stream sind.

11. System (100) nach einem der vorhergehenden Ansprüche, ferner umfassend eine Ausrüstung (113) zur Multicast-Übertragung von Inhalten, die so konfiguriert ist, dass sie den Inhalt eines übertragenen Multicast-Streams von einem ersten Kanal zu einem zweiten Kanal umschaltet, System, in dem die Inhalte beschreibenden Manifestdateien (115) für beide Kanäle die gleiche Referenzierung des konvertierten Unicast-Streams auf den Domänennamen umfassen, und die externe Übertragungsausrüstung (114) für Manifestdateien so konfiguriert ist, dass sie eine Steuermanifestdatei (116), die mit dem ersten Kanal vor der Umschaltung verbunden ist, so ändert, dass jede Priorität für den konvertierten Unicast-Stream gelöscht wird, und eine Steuermanifestdatei, die mit dem zweiten Kanal nach der Umschaltung verbunden ist, so ändert, dass sie eine Priorität für den konvertierten Unicast-Stream festlegt.

12. Vorrichtung (151, 152), umfassend einen Gateway-Agenten (300), der in der Lage ist, sich mit einem lokalen Teilnehmernetzwerk (150) zu verbinden, auf das ein Benutzer-Videoplayer (152) zugreift, wobei die Vorrichtung umfasst:
einen Multicast-Agenten (310), der in der Lage ist, einen Multicast-Stream von einem öffentlichen Netzwerk außerhalb des lokalen Teilnehmernetzwerks (150) zu empfangen, wobei das externe öffentliche Netzwerk Inhalte (111) beschreibende Manifestdateien (115, 116) überträgt, auf die über ein öffentliches Unicast-Inhaltsübertragungsnetzwerk (120) zugegriffen werden kann, einen Multicast-Stream-in-Unicast-Stream-Konverter (320), und
einen lokalen Webserver (330), der dem Benutzer-Videoplayer den konvertierten Unicast-Stream zur Verfügung stellt,
**dadurch gekennzeichnet, dass** der Gateway-Agent so konfiguriert ist, dass er den lokalen Webserver (330) im lokalen Teilnehmernetzwerk (150) mit einem dedizierten Domänennamen freigibt, der nicht außerhalb der lokalen Benutzernetzwerke betrieben wird und sich vom öffentlichen Unicast-Domänennamen unterscheidet, der in den vom externen öffentlichen Netzwerk übertragenen Manifestdateien den konvertierten Unicast-Stream referenziert.

13. Hybrides adaptives Videostreamingverfahren in einem Videostreamingsystem (100), das eine Übertragungsausrüstung (114) umfasst, die extern zu einem lokalen Teilnehmernetzwerk (150) ist und konfiguriert ist, um Inhalte (111) beschreibende Manifestdaten (115, 116) zu übertragen, auf die über ein öffentliches Unicast-Inhaltsübertragungsnetzwerk (120) zugegriffen werden kann, und mindestens einen Gateway-Agenten (300) auf dem lokalen Teilnehmernetzwerk (150) umfasst, auf den ein Benutzer-Videoplayer (152) zugreift, wobei das Verfahren folgende Schritte umfasst:
Konvertieren eines Multicast-Streams in einen Unicast-Stream über den Gateway-Agenten, und
Bereitstellen des konvertierten Unicast-Streams an den Benutzer-Videoplayer über einen lokalen Webserver (330) im Gateway-Agenten,
wobei das Verfahren **dadurch gekennzeichnet ist, dass** es Folgendes umfasst:
Konfigurieren des Gateway-Agenten (300), um den lokalen Webserver (330) im lokalen Teilnehmernetzwerk (150) mit einem dedizierten Domänennamen freizugeben, der nicht außerhalb der lokalen Benutzernetzwerke betrieben wird und sich vom öffentlichen Unicast-Domänennamen unterscheidet, und
Konfigurieren der externen Übertragungsausrüstung zum Übertragen von Manifestdateien (115, 116), die den konvertierten Unicast-Stream auf diesen Domänennamen referenzieren.

14. Nichtflüchtiger, computerlesbarer Datenträger, auf dem ein Programm zum Durchführen des Verfahrens nach Anspruch 13 gespeichert ist, wenn dieses Programm von einem Prozessor ausgeführt wird.

## Claims

1. A hybrid adaptive video streaming system (100) comprising:
broadcast equipment (114) external to a subscriber local network (150), configured to broadcast manifest files (115, 116) describing contents (111) accessible from a public unicast content broadcast network (120), and
at least one gateway agent (300) on the subscriber local network (150) to which a user video player (152) accesses, the gateway agent comprising a multicast stream-unicast stream converter (320) and a local web server (330) making the converted unicast stream available to the user video player,
**characterised in that** the local web server (330) is exposed on the subscriber local network (150) with a dedicated domain name, which is not operated outside user local networks and different from the public unicast domain name, and the manifest files (115, 116) broadcast by the external broadcast equipment (114) reference the converted unicast stream, on this domain name.

2. The system (100) according to claim 1, comprising a plurality of gateway agents (300) associated with a plurality of respective subscriber local networks (150) to which user video players access, and the local web server (330) of each gateway agent is exposed with the same domain name.

3. The system (100) according to claim 1 or 2, wherein the local web server is an HTTPs server.

4. The system (100) according to one of the preceding claims, wherein the external broadcast equipment (114) broadcasts a steering manifest file (116) defining a priority order between the converted unicast stream referenced on the domain name and one or more identical content(s) referenced, in the content describing manifest files (115), under a different path.

5. The system (100) according to claim 4, wherein the content describing manifest files (115) comprise prioritisation attributes (242, 243, 244) associated with different paths including the domain name, and the steering manifest file (116) provides an ordered list (270) of prioritisation attributes.

6. The system (100) according to claim 4 or 5, wherein the broadcast equipment (114) is configured to declare, in the steering manifest file (116), content alternative to the converted unicast stream as being prioritised over the converted unicast stream, and
upon detection of a start event of the local web server, to modify the steering manifest file so as to declare the converted unicast stream as being prioritised.

7. The system (100) according to claim 6, wherein the external broadcast equipment (114) is configured to receive, from the user video player (152), a request to obtain the steering manifest file (116), the request comprising an indication to start the local web server, and the local web server start event comprises one of:
- receiving the start indication, and
- sending, in response to the request and to a gateway agent manager (160), an instruction of starting the local web server.

8. The system (100) according to one of claims 4 to 7, wherein the steering manifest file (116) complies with the Steering Manifest defined in the specification "HLS Content Steering Specification, v1.2b1".

9. The system (100) according to one of claims 4 to 8, wherein the manifest files (115) comprise a first track referencing the converted unicast stream on the domain name and at least one second track referencing the identical content(s) under a different path to a public unicast content broadcast network (120), said first track indicating at least one recovery server among the public unicast content broadcast network(s).

10. The system (100) according to one of the preceding claims, wherein referencing, in the content describing manifest files (115), the converted unicast stream on the domain name comprises an indication (630) of a replacement server, in the public unicast content broadcast network (120), capable of serving content identical to the converted unicast stream.

11. The system (100) according to one of the preceding claims, further comprising content multicast broadcast equipment (113) configured to switch the content of a broadcast multicast stream, from a first channel to a second channel, in which system the content describing manifest files (115) comprise, for both channels, the same referencing of the converted unicast stream, on the domain name, and the external broadcast equipment (114) of manifest files is configured to modify a steering manifest file (116) associated with the first channel before said switching so as to eliminate any priority to the converted unicast stream, and to modify a steering manifest file associated with the second channel after said switching so as to declare a priority to the converted unicast stream.

12. A device (151, 152) comprising a gateway agent (300) capable of being connected to a subscriber local network (150) to which a user video player (152) accesses, the device comprising:
a multicast agent (310) capable of receiving a multicast stream from a public network external to the subscriber local network (150), which external public network broadcasts manifest files (115, 116) describing content (111) accessible from a public unicast content broadcast network (120),
a converter (320) from the multicast stream to a unicast stream, and
a local web server (330) making the converted unicast stream available to the user video player,
**characterised in that** the gateway agent is configured to expose the local web server (330) on the subscriber local network (150) with a dedicated domain name, which is not operated outside the user local networks and different from the public unicast domain name, referencing, in the manifest files broadcast by the external public network, the converted unicast stream.

13. A hybrid adaptive video streaming method in a video streaming system (100) comprising broadcast equipment (114) external to a subscriber local network (150) and configured to broadcast manifest files (115, 116) describing content (111) accessible from a public unicast content broadcast network (120), and comprising at least one gateway agent (300) on the subscriber local network (150) to which a user video player (152) accesses, the method comprising the following steps of:
converting, by the gateway agent, a multicast stream into a unicast stream, and
making available to the user video player, via a local web server (330) in the gateway agent, the converted unicast stream,
the method being **characterised in that** it comprises:
configuring the gateway agent (300) to expose the local web server (330) on the subscriber local network (150) with a dedicated domain name, which is not operated outside the user local networks and different from the public unicast domain name, and
configuring the external broadcast equipment to broadcast manifest files (115, 116) that reference the converted unicast stream, on this domain name.

14. A non-transitory computer-readable medium having a program for implementing the method according to any one of claims 1 to 13 recorded thereon, when this program is executed by a processor.
